# EUROPEAN PATENT SPECIFICATION

(11) **EP 2 949 555 B1**
(45) Date of publication and mention of the grant of the patent: **13.07.2016**
(21) Application number: 14196816.4
(22) Date of filing: 08.12.2014
(51) Int. Cl.: B62J 6/00, B62J 6/02, B62J 17/02, B62J 29/00

(54) **Motorcycle**
Motorrad
Moto

(30) Priority: 30.05.2014 JP 2014112935
(43) Date of publication of application: 02.12.2015
(73) Proprietor: Yamaha Hatsudoki Kabushiki Kaisha, Iwata-shi, Shizuoka 438-8501 (JP)
(72) Inventor: Tachibana, Masumi, Iwata-shi, Shizuoka-ken 438-8501 (JP)
(74) Representative: Moreland, David

(56) References cited:
- EP-A1- 2 669 161
- EP-A1- 2 712 793
- EP-A2- 1 688 342
- US-A1- 2006 056 191

## Description

### FIELD OF INVENTION

The present invention relates to a saddle-ride or straddle-type vehicle, such as a saddle-straddling type motor vehicle, that includes position lamps.

### BACKGROUND TO INVENTION

In a saddle-ride or straddle-type vehicle, e.g. a saddle-straddling type motor vehicle, such as a motorcycle, position lamps are provided at a front cowl (a front cover) in order to achieve conspicuousness or visibility of the vehicle (see JP 2009-262913 A (YAMAHA MOTOR CO LTD.), for example).

JP 2009-262913 A describes a saddle-ride or straddle-type vehicle, such as a saddle-straddling type motor vehicle, that includes a conventional front cover, a pair of position lamps having bulbs as light sources, the position lamps being provided at respective positions close to the outside in a vehicle width direction of the front cover.

US 2006-056191 A describes a vehicle according to the preamble of claim 1, that includes a first cover member for covering the handlebars, a first light member mounted to the front side of the first cover member, a second cover member arranged to cover the front side of the head pipe and a second light member mounted to the second cover member.

EP1688342 A describes a motorcycle comprising a front cowl formed by a combination of a front cowl upper and a front cowl lower. The front cowl upper covers the portion of the vehicle, that is ahead of the handlebar and the front cowl lower covers the range from a lower edge portion of the front cowl upper to the side portions of an engine. Right and left headlamps are fitted in the front cowl upper and an air suction port for sucking air into an air cleaner is provided between the left and right headlamps.

In recent years, however, it was desirable to provide more conspicuous or visible position lamps at more conspicuous or visible positions than to provide position lamps at positions close to the outside in the vehicle width direction of a front cover in order to apply uniqueness to the saddle-straddling type motor vehicle.

On the other hand, when the more conspicuous or visible position lamps are provided at the more conspicuous or visible positions, the position lamps become larger than conventional position lamps due to a further increase in conspicuousness or visibility of the position lamps. Therefore, it was difficult to provide the more conspicuous or visible position lamps at the more conspicuous or visible positions while maintaining the shape of the front cover, having good aerodynamic characteristics.

An object of the present invention is to provide a saddle-ride or straddle-type vehicle, such as a saddle-straddling type motor vehicle, which provides a unique impression due to arrangement of more conspicuous or visible position lamps at more conspicuous or visible positions while a reduction in aerodynamic characteristics is inhibited.

### SUMMARY OF INVENTION

Various aspects of the present invention are defined in the appended independent claims. Some optional features are defined in the appended dependent claims.

According to a first aspect of the present invention there is provided a saddle-ride or straddle-type vehicle, such as a saddle-straddling type motor vehicle. The vehicle may comprise a head pipe, a cover member arranged in front of the head pipe, and a position lamp unit. The position lamp unit may be arranged at the cover member. The cover member may have a recess. The recess may be arranged at a center of the vehicle and may be concaved, recessed, indented or dented rearward of the vehicle. The vehicle may comprise a front cover member that extends from a position further forward than an opening of the recess to a position further upward and rearward than the opening in a vehicle side view. The recess may extend upward, rightward and leftward from a position in front of the opening of the recess in a vehicle front view. The vehicle may comprise a right groove. The right groove may be formed to be located at a position further rightward than the recess and to extend rightward. The right groove may be concaved, recessed, indented or dented towards an inside of the vehicle. The vehicle may comprise a left groove. The left groove may be formed to be located at a position further leftward than the recess and to extend leftward. The left groove may be concaved, recessed, indented or dented towards an inside of the vehicle. The position lamp unit may have a right light-transmitting member. The right light-transmitting member may have a length larger in a right-and-left direction than a length in a top-and-bottom direction. The right light-transmitting member may have a light-transmitting property. The right light-transmitting member may be provided at the cover member to be located below the front cover member and to extend upward and rightward. The position lamp unit may have a left light-transmitting member. The left light-transmitting member may have a length larger in the right-and-left direction than a length in the top-and-bottom direction. The left light-transmitting member may have the light-transmitting property. The left light-transmitting member may be provided at the cover member to be located below the front cover member and to extend upward and leftward. The right groove and the left groove may be provided at positions further downward than the respective right light-transmitting member and the left light-transmitting member.

In this saddle-straddling type motor vehicle, the cover member may be arranged in front of the head pipe. The cover member may have the recess, the front cover member, the right groove and the left groove. The recess may be arranged at the center of the vehicle. The recess may be concaved, recessed, indented or dented rearward of the vehicle. The front cover member may extend from the position further forward than the opening of the recess to the position further upward and rearward than the opening in the vehicle side view. The front cover member may extend upward, rightward and leftward from the position in front of the opening of the recess in the vehicle front view. The right groove may be formed to be located at the position further rightward than the recess and to extend rightward. The right groove may be may be concaved, recessed, indented or dented towards the inside of the vehicle. The left groove may be formed to be located at the position further leftward than the recess and to extend leftward. The left groove may be concaved, recessed, indented or dented towards the inside of the vehicle.

The position lamp unit may have the right light-transmitting member and the left light-transmitting member. The right light-transmitting member may have the length larger in the right-and-left direction than the length in the top-and-bottom direction. The right light-transmitting member may have the light-transmitting property. The right light-transmitting member may be provided at the cover member to be located below the front cover member and to extend upward and rightward. The left light-transmitting member may have the length larger in the right-and-left direction than the length in the top-and-bottom direction. The left light-transmitting member may have the light-transmitting property. The left light-transmitting member may be provided at the cover member to be located below the front cover member and to extend upward and leftward. The right groove and the left groove may be provided at the positions further downward than the respective right light-transmitting member and the left light-transmitting member.

Since this configuration may cause each of the right light-transmitting member and the left light-transmitting member of the position lamp unit to have a long thin shape, a light-emitting region, which may be small in the top-and-bottom direction and large in the right-and-left direction, may be ensured. Thus, the size of the light-emitting areas of the right light-transmitting member and the left light-transmitting member may be increased to be larger than the light-emitting areas of the conventional position lamps. Further, since the size of the light-emitting areas of the right-transmitting member and the left light-transmitting member may be increased in the right-and-left direction, the size of the right light-transmitting member and the left light-transmitting member may be reduced in the top-and-bottom direction. In particular, when the light sources of the position lamps are LEDs (light-emitting diodes), the size of the right light-transmitting member and the left light-transmitting member may be more sufficiently reduced in the top-and-bottom direction while a reduction in conspicuousness or visibility is inhibited.

In the configuration of the conventional saddle-straddling type motor vehicle, when a cover member has a recess, an air stream, which is to be received during the travelling, is shielded by the recess, so that aerodynamic characteristics are easily reduced. In contrast, the configuration of the present invention may cause the air stream shielded by the recess to be led rearward of the vehicle from the right and left sides of the recess by the right groove and the left groove. Therefore, even when the cover member has the recess, air resistance during the travelling may be reduced, so that a reduction in aerodynamic characteristics may be inhibited.

Further, the front cover member may extend from the position further forward than the opening of the recess to the position further upward and rearward than the opening in the vehicle side view. The front cover member may extend upward, rightward and leftward from the position in front of the opening of the recess in the vehicle front view. Therefore, an air stream, which may be directed to the recess during the travelling, may be easily led rearward from above the recess. Thus, even when the cover member has the recess, the air resistance during the travelling may be reduced, so that a reduction in aerodynamic characteristics may be inhibited.

Further, each of the right light-transmitting member and the left light-transmitting member may have a long thin shape that may be small in the top-and-bottom direction and large in the right-and-left direction. Therefore, the right light-transmitting member and the left light-transmitting member may have high conspicuousness or visibility and good aerodynamic characteristics. Such a right light-transmitting member may be arranged below the front cover member and above the right groove, and may be provided at the cover member to extend upward and rightward. Further, the left light-transmitting member may be arranged below the front cover member and above the left groove, and may be provided at the cover member to extend upward and leftward.

Therefore, the right light-transmitting member and the left light-transmitting member may lead an air stream, which may be received by the cover member, rearward by hardly shielding the air stream. Thus, the position lamp unit that may have high conspicuousness or visibility and good aerodynamic characteristics may be arranged at the cover member while a reduction in aerodynamic characteristics of the vehicle may be inhibited. Further, since the position lamp unit may be arranged closer the center of the vehicle, conspicuousness or visibility may be improved.

In this manner, the more conspicuous or visible position lamp unit may be arranged at the more conspicuous or visible position while a reduction in aerodynamic characteristics may be inhibited. As a result, the saddle-straddling type motor vehicle may give a unique impression.

The saddle-straddling type motor vehicle may further include a head lamp unit provided at a position further downward than the position lamp unit. At least part of the cover member may be arranged between the position lamp unit and the head lamp unit.

In this case, the position lamp unit may be arranged so as to be spaced apart from the head lamp unit. Further, the position lamp unit may be separated from the head lamp unit with at least part of the cover member being interposed therebetween. Thus, it may be possible to improve conspicuousness or visibility of the position lamp unit without being affected by the head lamp unit.

A front edge of the front cover member may obliquely extend upward from a position further outward than a center in one direction. The front edge of the front cover member may obliquely extend upward from a position further outward than the center in another direction in the vehicle front view. In this case, an air stream, which may be received or receivable by the front cover member during the travelling, may be more easily led upward and rearward. Thus, aerodynamic characteristics of the cover member may be improved.

The cover member may further include a right under cover member that may be arranged below the front cover member. The right under cover member may include the right groove. The right under cover member may extend downward and rearward from the opening of the recess of the front cover member in the vehicle side view. The cover member may include a left under cover member that may be arranged below the front cover member. The left under cover member may include the left groove. The left under cover member may extend downward and rearward from the opening of the recess of the front cover member in the vehicle side view. The cover member may include a right side cover member that may be attached to the right under cover member. The right side cover member may be arranged outside of at least part of an engine to extend rearward from the right under cover member. The cover member may include a left side cover member that may be attached to the left under cover member. The left side cover member may be arranged outside of at least part of the engine to extend rearward from the left under cover member. A surface area of the front cover member may be larger than a total surface area of the right under cover member and the left under cover member in the vehicle front view. The right light-transmitting member may be provided to extend along the right groove between the front cover member and the right groove. The left light-transmitting member may be provided to extend along the left groove between the front cover member and the left groove.

In this case, an air stream, which may be shielded by the recess, may be led rearward by the right side cover member after being led rightward and rearward along the right groove of the right under cover member. Similarly, an air stream, which may be shielded by the recess, may be led rearward by the left side cover member after being led leftward and rearward along the left groove of the left under cover member. Thus, the aerodynamic characteristics of the cover member may be improved.

Further, a large part of an air stream, which may be received or receivable during the travelling, may come into contact with the front cover member having a large surface area. In the present invention, since the position lamp unit may not be provided at the front cover member, the shape of the front cover member may not be limited by the position lamp unit. Thus, the front cover member may be configured to be of a shape specially formed for a reduction in air resistance.

Further, the right light-transmitting member may be provided to extend along the right groove between the front cover member and the right groove. Further, the left light-transmitting member may be provided to extend along the left groove between the front cover member and the left groove. Thus, the right light-transmitting member and the left light-transmitting member may lead an air stream, which may be to be received by the cover member, rearward by hardly shielding the air stream. As a result, aerodynamic characteristics of the front portion of the vehicle may be improved while the conspicuousness or visibility of the position lamp unit may be ensured.

The position lamp unit may include holding members. The holding members may hold the respective right light-transmitting member and the respective left light-transmitting member at the cover member. The holding member of the position lamp unit may be arranged to overlap with at least part of the front cover member, the right groove and the left groove behind the front cover member, the right groove and the left groove in the vehicle front view.

In this case, the right light-transmitting member and the left light-transmitting member may be held at the cover member by the holding members. Here, the holding members may be arranged to overlap with at least part of the front cover member, the right groove and the left groove behind the front cover member, the right groove and the left groove in the vehicle front view. Therefore, the holding members may hold the right light-transmitting member and the left light-transmitting member at the cover member without reductions in conspicuousness or visibility and aerodynamic characteristics of the right light-transmitting member and the left light-transmitting member.

A length of the right light-transmitting member may be larger than a length of the recess from a center of the front cover member to one side edge of the opening in a direction in which the right groove may extend in the vehicle front view. A length of the right light-transmitting member may be larger than a length from the center of the front cover member to the one side edge of the opening of the recess in the right-and-left direction in the vehicle front view. A width of the right light-transmitting member may be smaller than a width of the right groove in the top-and-bottom direction in the vehicle front view. A length of the left light-transmitting member may be larger than a length from the center of the front cover member to another side edge of the opening of the recess in a direction in which the left groove may extend in the vehicle, front view. A length of the left light-transmitting member may be larger than a length from the center of the front cover member to the other side edge of the opening of the recess in the right-and-left direction in the vehicle front view. A width of the left light-transmitting member may be smaller than a width of the left groove in the top-and-bottom direction in the vehicle front view.

In this case, the right light-transmitting member may be sufficiently small in the top-and-bottom direction. The right light-transmitting member may be sufficiently large in the right-and-left direction and in the direction in which the right groove may extend. Similarly, the left light-transmitting member may be sufficiently small in the top-and-bottom direction. The left light-transmitting member may be sufficiently large in the right-and-left direction and in the direction in which the left groove may extend. Thus, the conspicuousness or visibility of the right light-transmitting member and the left light-transmitting member may be improved while good aerodynamic characteristics of the right light-transmitting member and the left light-transmitting member may be maintained.

The saddle-straddling type motor vehicle may further include an air duct. The air duct may be arranged in front of the head pipe and leads air to an engine. The opening of the recess may include an intake passage of the air duct.

In this case, when an intake valve or a throttle valve of the engine is in an open state, air around the recess of the cover member may be led to the engine by the air duct. On the other hand, when the intake valve and the throttle valve of the engine are in a closed state, air around the recess may be led to the space above and behind the recess along the cover member, or may be led outward and rearward from the right and left sides of the recess. Thus, air may be supplied to the engine while the aerodynamic characteristics of the front portion of the vehicle may be improved.

Each of the right light-transmitting member and the left light-transmitting member may be provided as part of an outer lens.

In this case, directivity may be applied to the light emitted from the position lamp unit by the outer lens without limitation to the shape of the cover member. Thus, the conspicuousness or visibility of the right light-transmitting member and the left light-transmitting member may be sufficiently improved.

A width in the top-and-bottom direction of each of the right groove and the left groove may gradually increase rearward in a vehicle front-and-rear direction.

In this case, air in front of the vehicle may be efficiently led rearward. Thus, the aerodynamic characteristics of the front portion of the vehicle may be sufficiently improved.

The position lamp unit may further include a right light source. The right light source may be arranged at one end of the right light-transmitting member. The position lamp may include a right light-guiding member. The right light-guiding member may be arranged behind the right light-transmitting member. The right light-guiding member may lead light generated by the right light source to another end of the right light-transmitting member while emitting the light forward. The position lamp may include a left light source. The left light source may be arranged at one end of the left light-transmitting member. The position lamp may include a left light-guiding member. The left light-guiding member may be arranged behind the left light-transmitting member. The left light-guiding member may lead light generated by the left light source to another end of the light-transmitting member while emitting the light forward. The left and right light source may each comprise a light-emitting diode (LED).

In this case, the light generated by the right light source may be led from the one end to the other end of the right light-transmitting member by the right light-guiding member. Further, the light generated by the left light source may be led from the one end to the other end of the left light-transmitting member by the left light-guiding member. Thus, the size of each of the light-emitting areas of the right light-transmitting member and the left light-transmitting member may be increased, since there are only a small number of light sources. As a result, the weight of the position lamp unit may be reduced, and electric power consumed by the position lamp unit may be reduced.

The position lamp unit may have a fadeout function that gradually turns off light in response to turn-off instruction. In this case, conspicuousness or visibility of the vehicle may be ensured for a certain time period after the turn-off instruction has been received.

A character may be described on an upper or lower side surface of at least one of the right light-transmitting member and the left light-transmitting member in the vehicle front view.

In this case, a character such as an authorization mark may be described on at least one of the right light-transmitting member and the left light-transmitting member without reductions in conspicuousness or visibility and aerodynamic characteristics of the right light-transmitting member and the left light-transmitting member.

The position lamp unit may comprise a right position lamp and a left position lamp. The right position lamp and the left position lamp may be arranged at the cover member. The front cover member of the cover member may extend upward and rearward from a position further forward than an intake opening in a vehicle side view, and may extend upward, rightward and leftward from a position in front of the intake opening in a vehicle front view. The right groove may be formed to be located at a position further rightward than the intake opening and to extend rightward. The left groove may be formed to be located at a position further leftward than the intake opening and to extend leftward. The right position lamp and the left position lamp may be provided below the front cover member and above the respective right and left grooves.

According to a second aspect of the invention there is provided a cover member and position lamp unit assembly for a saddle-ride or straddle-type vehicle, such as a saddle-straddling type motor vehicle according to the first aspect of the present invention. The assembly may comprise a cover member configured for arrangement in front of a head pipe of the vehicle.

The assembly may comprise a position lamp unit arranged at the cover member. The cover member may have a recess. The recess may be arranged or arrangable at a center of the vehicle. The recess may be arranged to be concaved, recessed, indented or dented rearward of the vehicle.

The assembly may comprise a front cover member. The front cover member may extend from a position further forward than an opening of the recess to a position further upward and rearward than the opening in a vehicle side view. The front cover member may extend upward, rightward and leftward from a position in front of the opening of the recess in a vehicle front view.

The assembly may comprise a right groove. The right groove may be formed to be located at a position further rightward than the recess and to extend rightward. The right groove may be arranged to be concaved, recessed, indented or dented towards an inside of the vehicle.

The assembly may comprise a left groove. The left groove may be formed to be located at a position further leftward than the recess and to extend leftward. The left groove may be arranged to be concaved, recessed, indented or dented towards an inside of the vehicle.

The position lamp unit may have a right light-transmitting member. The right light-transmitting member may have a length larger in a right-and-left direction than a length in a top-and-bottom direction. The right light-transmitting member may have a light-transmitting property. The right light-transmitting member may be provided at the cover member to be located below the front cover member and to extend upward and rightward.

The position lamp unit may have a left light-transmitting member. The left light-transmitting member may have a length larger in the right-and-left direction than a length in the top-and-bottom direction. The left light-transmitting member may have the light-transmitting property. The left light-transmitting member may be provided at the cover member to be located below the front cover member and to extend upward and leftward.

The right groove and the left groove may be provided at positions further downward than the respective right light-transmitting member and the respective left light-transmitting member.

According to a third aspect of the present invention there is provided a position lamp unit for a saddle-ride or straddle-type vehicle, such as a saddle-straddling type motor vehicle, according to the first aspect of the present invention and/or a cover member and position lamp unit assembly according to the second aspect of the invention.

The position lamp unit may be configured for arrangement at a cover member of the vehicle.

The position lamp unit may have a right light-transmitting member. The right light-transmitting member may have a length larger in a right-and-left direction than a length in a top-and-bottom direction. The right light-transmitting member may have a light-transmitting property. The right light-transmitting member may be providable at the cover member to be located below a front cover member of the vehicle and to extend upward and rightward.

The position lamp unit may have a left light-transmitting member. The left light-transmitting member may have a length larger in the right-and-left direction than a length in the top-and-bottom direction. The left light-transmitting member may have the light-transmitting property. The left light-transmitting member may be providable at the cover member to be located below the front cover member of the vehicle and to extend upward and leftward.

According to a fourth aspect of the present invention there is provided a method of assembling or arranging a saddle-ride or straddle-type vehicle, such as a saddle-straddling type motor vehicle.

The method may comprise providing a head pipe, a cover member and a position lamp unit.

The method may comprise arranging the cover member in front of the head pipe.

The method may comprise arranging the position lamp unit at the cover member. The cover member may have a recess. The method may comprise arranging the recess at a center of the vehicle. The recess may be recessed, concaved, recessed, indented or dented rearward of the vehicle.

The method may comprise providing a front cover member to extend from a position further forward than an opening of the recess to a position further upward and rearward than the opening in a vehicle side view, and to extend upward, rightward and leftward from a position in front of the opening of the recess in a vehicle front view.

The method may comprise providing or forming a right groove to be located at a position further rightward than the recess and to extend rightward. The right groove may be concaved, recessed, indented or dented towards an inside of the vehicle.

The method may comprise providing or forming a left groove to be located at a position further leftward than the recess and to extend leftward. The left groove may be concaved, recessed, indented or dented towards an inside of the vehicle.

The position lamp unit may have a right light-transmitting member. The right light-transmitting member may have a length larger in a right-and-left direction than a length in a top-and-bottom direction. The right light-transmitting member may have a light-transmitting property.

The position lamp unit may have a left light-transmitting member. The left light-transmitting member may have a length larger in the right-and-left direction than a length in the top-and-bottom direction. The left light-transmitting member may have the light-transmitting property.

The method may comprise providing the right light-transmitting member at the cover member to be located below the front cover member and to extend upward and rightward.

The method may comprise providing the left light-transmitting member at the cover member to be located below the front cover member and to extend upward and leftward.

The method may comprise providing the right groove and the left groove at positions further downward than the respective right light-transmitting member and the respective left light-transmitting member.

It will be appreciated that the feature of the right and/or left groove(s) being concaved, recessed, indented or dented towards an inside of the vehicle may comprise or be defined as the left and/or right groove(s) being concaved, recessed, indented or dented in a longitudinal and/or transverse direction of the vehicle, and/or combinations thereof. The feature of the right and/or left groove(s) being concaved, recessed, indented or dented towards an inside of the vehicle may comprise or be defined as a width of the groove(s) increasing rearward from the front of the vehicle, e.g. increasing rearward from the front of the vehicle in a (e.g. substantially) transverse and/or longitudinal direction of the vehicle, and/or combinations thereof.

It will be appreciated that the feature of the recess being concaved, recessed, indented or dented may comprise or be defined as the recess being concaved, recessed, indented or dented in a (e.g. substantially) longitudinal and/or transverse direction of the vehicle, and/or combinations thereof.

Features described in relation to any of the above aspects may also be applicable to any of the other above aspects. Features described above and/or below individually and/or in combination in relation to any of the above aspects may be jointly or individually and/or separably applicable to any other of the above aspects. Apparatus features corresponding to those described above and/or below in relation to a method and also method features corresponding to the use, assembly and fabrication of any apparatus features described above and/or below are also intended as falling within the scope of the present invention as defined in the appended claims.

### BRIEF DESCRIPTION OF DRAWINGS

An embodiment of the present invention will now be described, by way of example only, and with reference to the accompanying drawings, which are:
- **Figure 1**: a side view of one side of a motorcycle according to one embodiment of the present invention;
- **Figure 2**: a front view of the motorcycle of Figure 1;
- **Figure 3A**: a side view of a steering shaft and a front fork;
- **Figure 3B**: a front view of a steering shaft and a front fork;
- **Figure 4**: a side view of one side of a front portion of the motorcycle;
- **Figure 5**: a front view of the front portion of the motorcycle;
- **Figure 6**: an enlarged side view of a right side of the front portion of the motorcycle;
- **Figure 7**: an enlarged side view of a left side of the front portion of the motorcycle;
- **Figure 8**: a perspective view of a position lamp unit;
- **Figure 9**: a schematic diagram showing the configuration of a left position lamp;
- **Figure 10**: a perspective view of the left position lamp;
- **Figure 11**: a cross sectional view taken along the line A-A of the left position lamp of Figure 5;
- **Figure 12**: an enlarged front view of the motorcycle showing the left position lamp and its periphery;
- **Figure 13**: a perspective view showing assembly steps of the front portion of the motorcycle;
- **Figure 14**: a perspective view showing the assembly steps of the front portion of the motorcycle;
- **Figure 15**: a perspective view showing the assembly steps of the front portion of the motorcycle;
- **Figure 16**: a perspective view showing the assembly steps of the front portion of the motorcycle; and
- **Figure 17**: a perspective view showing the assembly steps of the front portion of the motorcycle.

### DETAILED DESCRIPTION OF DRAWINGS

A saddle-ride or straddle-type vehicle, such as a saddle-straddling type motor vehicle, will be described below with reference to drawings. In the following description, a motorcycle will be described as one example of the saddle-ride or straddle-type vehicle, e.g. the saddle-straddling type motor vehicle.

### Schematic Configuration of Motorcycle

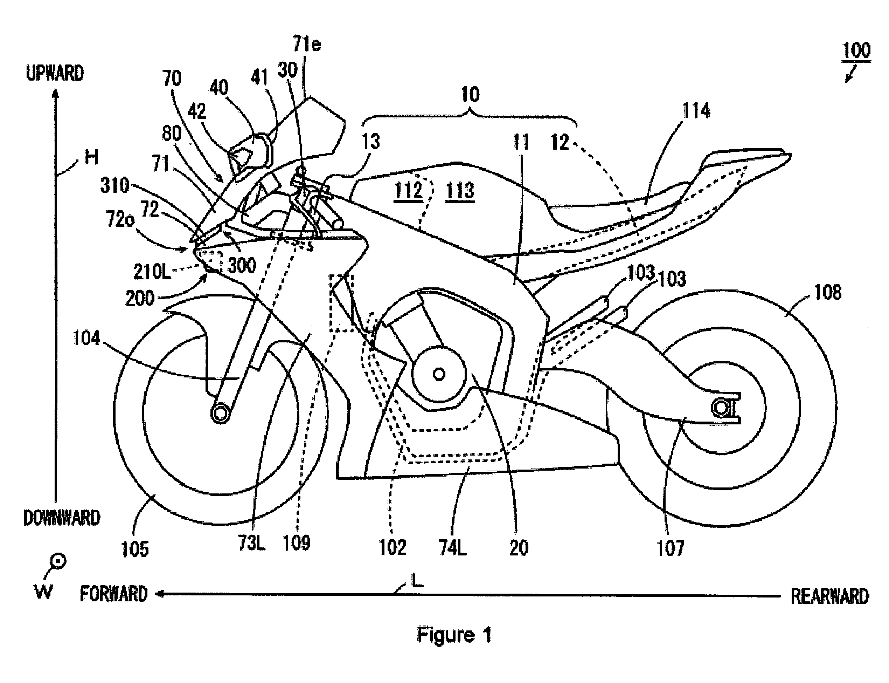

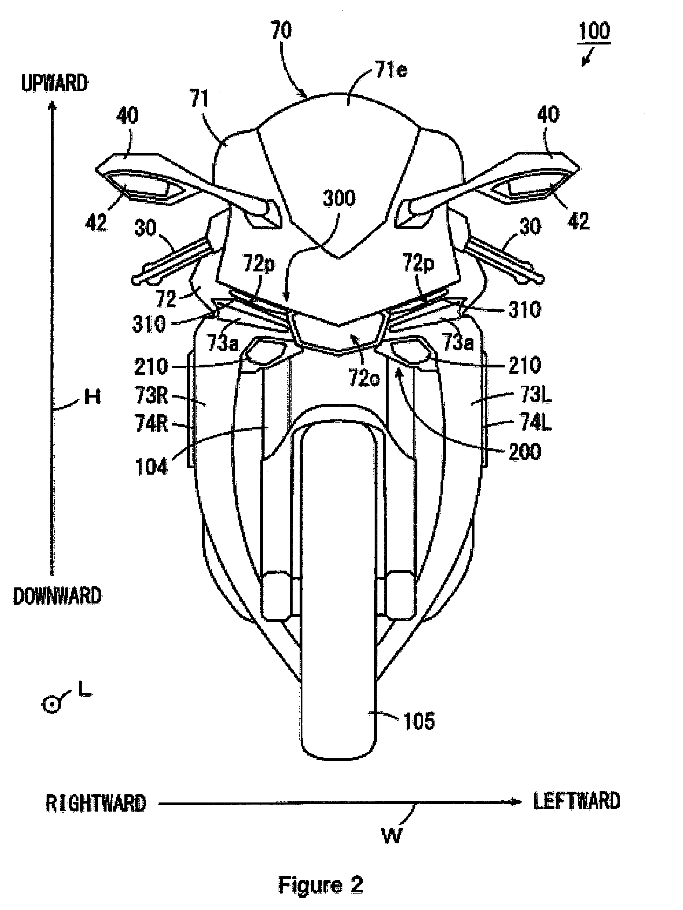

Figure 1 is a side view of one side of the motorcycle 100 according to one embodiment of the present invention. Figure 2 is a front view of the motorcycle of Figure 1. In Figures 1 and 2, the motorcycle 100 is shown standing up to be perpendicular to the road surface.

In Figures 1, 2, and each of subsequent diagrams, a front-and-rear direction L, a width direction W and a top-and-bottom direction H of the motorcycle 100 are indicated by arrows. In the following description, a direction in which the arrow is directed in the front-and-rear direction L is referred to as forward, and its opposite direction is referred to as rearward. Further, a direction in which the arrow is directed in the width direction W is referred to as leftward, and its opposite direction is referred to as rightward. Further, a direction in which the arrow is directed in the top-and-bottom direction H is referred to as upward, and its opposite direction is referred to as downward.

As shown in Figures 1 and 2, the motorcycle 100 includes a body frame 10. The body frame 10 includes a pair of main frames 11, namely right and left main frames 11, a pair of rear frames 12, namely right and left rear frames 12 and a head pipe 13. The head pipe 13 is arranged at the center in the width direction W. The right and left main frames 11 are provided to extend obliquely downward and rearward from the head pipe 13. The rear ends of the right and left main frames 11 are curved downward. The right and left rear frames 12 are attached to extend rearward from respective upper portions of the rear ends of the respective right and left main frames 11.

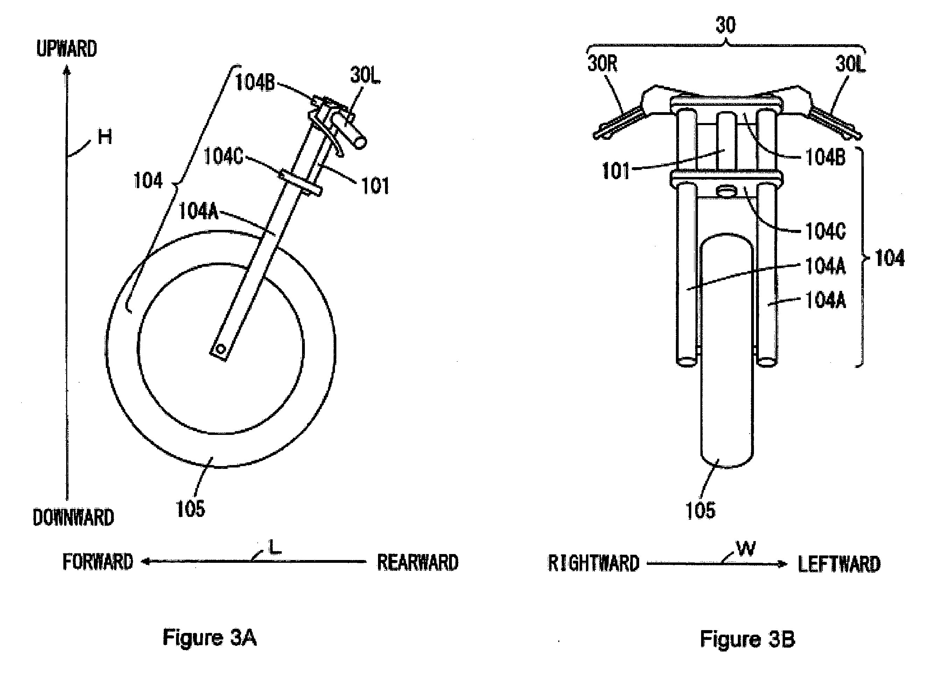

As shown in Figures 3A and 3B, a steering shaft (a stem shaft) 101 is inserted into the head pipe 13 shown in Figure 1. Figure 3A is a side view and Figure 3B is a front view of the steering shaft 101 and a front fork 104. As shown in Figures 3A and 3B, the front fork 104 is provided at the steering shaft 101 to extend downward.

The front fork 104 includes a pair of fork tubes 104A, namely right and left fork tubes 104A, an upper bracket 104B and an under bracket 104C. The upper bracket 104B couples the upper ends of the pair of fork tubes 104A and the steering shaft 101 to one another. The under bracket 104C couples portions further downward than the upper ends of the pair of fork tubes 104A and the steering shaft 101 to one another. A handle member 30, including a pair of handles 30R, 30L, namely right and left handles 30R, 30L, is attached to the pair of fork tubes 104A. The handle member 30 may be attached to a handle fixing member provided at the upper bracket 104B. A front wheel 105 is rotatably supported at the lower end of the front fork 104.

As shown in Figures 1 and 2, a position lamp unit 300, including a right position lamp 310R and a left position lamp 310L, is provided at a front portion of the motorcycle 100. Further, a head lamp unit 200, including a right head lamp 210R and a left head lamp 210L, is provided at the front portion of the motorcycle 100. As shown in Figure 1, a radiator 109 is arranged behind the right head lamp 210R and the left head lamp 210L.

An engine 20 is provided behind the front wheel 105 and at a lower portion of the pair of main frames 11. The engine 20 includes a cylinder unit and a crank unit. The cylinder unit includes a cylinder body, a cylinder head and the like. The cylinder head includes a fuel injection device, an ignition device and the like. The crank unit includes a crank case, a crankshaft, a generator, a transmission and the like. The crank unit is located below the cylinder unit.

A cover member (a cowl) 70 is arranged to cover the head pipe 13 and the handle member 30 from the front and to cover part of the front fork 104. The cover member 70 is arranged to extend rearward outside of part of the engine 20. The cover member 70 is attached to the body frame 10, and an air duct 80 that is described below. The cover member 70 is constituted by or includes a front cover member 71, an upper cover member 72, a right under cover member 73R, a left under cover member 73L, a right side cover member 74R and a left side cover member 74L. The front cover member 71 includes a windshield 71 e. Detailed configuration of the cover member 70 will be described below. The body frame 10 and the cover member 70 do not swing or rotate even when the handle member 30 is operated by a rider.

A pair of mirror devices 40, namely right and left mirror devices 40, is provided at the front cover member 71 of the cover member 70. Each mirror device 40 is an example of a mirror device, including a turning indicator lamp, and includes a mirror 41 directed rearward of the vehicle and a flasher or indicator 42 directed forward of the vehicle as shown in Figure 1. The rider of the motorcycle 100 can view an area behind the motorcycle 100 by looking into each mirror 41 while driving. Further, the rider of the motorcycle 100 can switch between an unlit or non-operating state and a blinking or operating state of each indicator or flasher 42 by operating a handle switch provided at the handle member 30.

Further, the right side cover member 74R and the left side cover member 74L are attached to the respective right under cover member 73R and respective left under cover member 73L of the cover member 70. The right side cover member 74R and the left side cover member 74L are arranged outside of both sides of at least part of the engine 20 to extend rearward from the respective right under cover member 73R and respective left under cover member 73L.

An air cleaner 112 is supported above the engine 20 by the pair of main frames 11. The air cleaner 112 is connected to a throttle body of the engine 20, and one end of an exhaust pipe 102 is attached to an exhaust port of the engine 20. A muffler 103 is attached to the other end of the exhaust pipe 102.

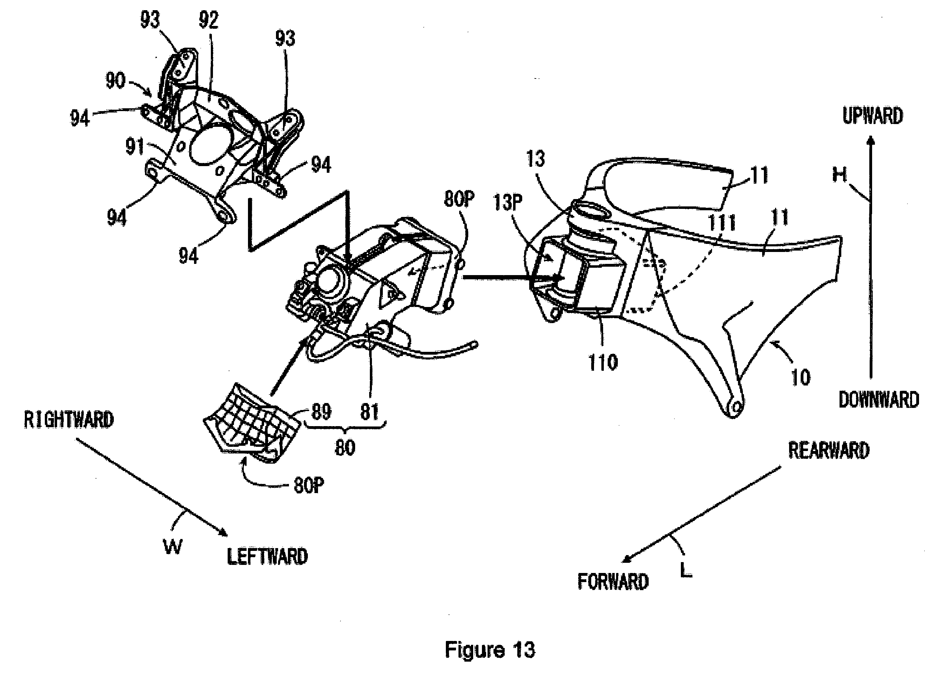

An intake passage 13P for leading air to the engine 20 (described below in relation to Figure 13) is formed at a center portion in the top-and-bottom direction H of the head pipe 13 to extend in the front-and-rear direction L. The air duct 80 having an intake passage 80P (described below in relation to Figure 13) is attached to a front end portion of the intake passage 13P in the head pipe 13. Further, an intake port of the air cleaner 112 is connected to the rear end portion of the intake passage 13P.

A fuel tank 113 is supported behind the air cleaner 112 by the pair of main frames 11. A seat 114 is supported behind the fuel tank 113 by the pair of rear frames 12. A rear arm 107 is provided to extend rearward from the lower ends of the main frames 11. A rear wheel 108 is rotatably held at the rear end of the rear arm 107.

### Configuration of Cover Member

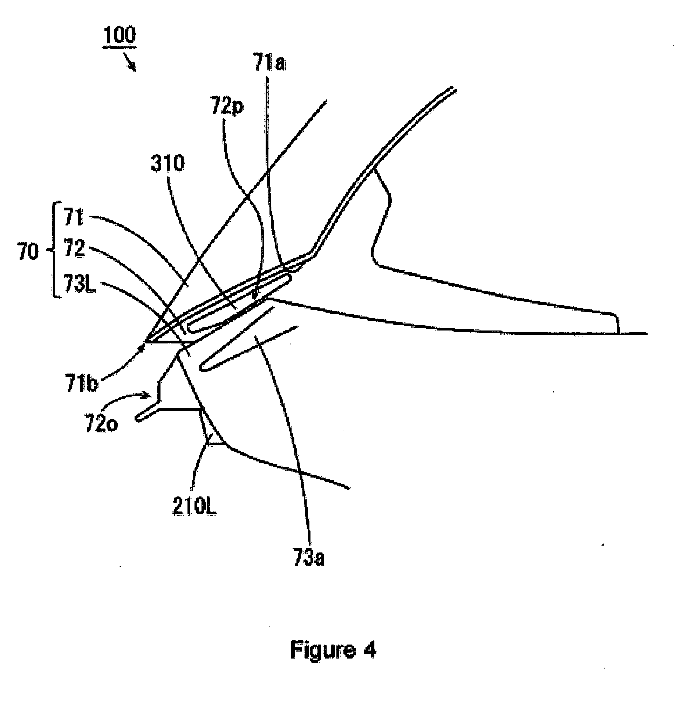

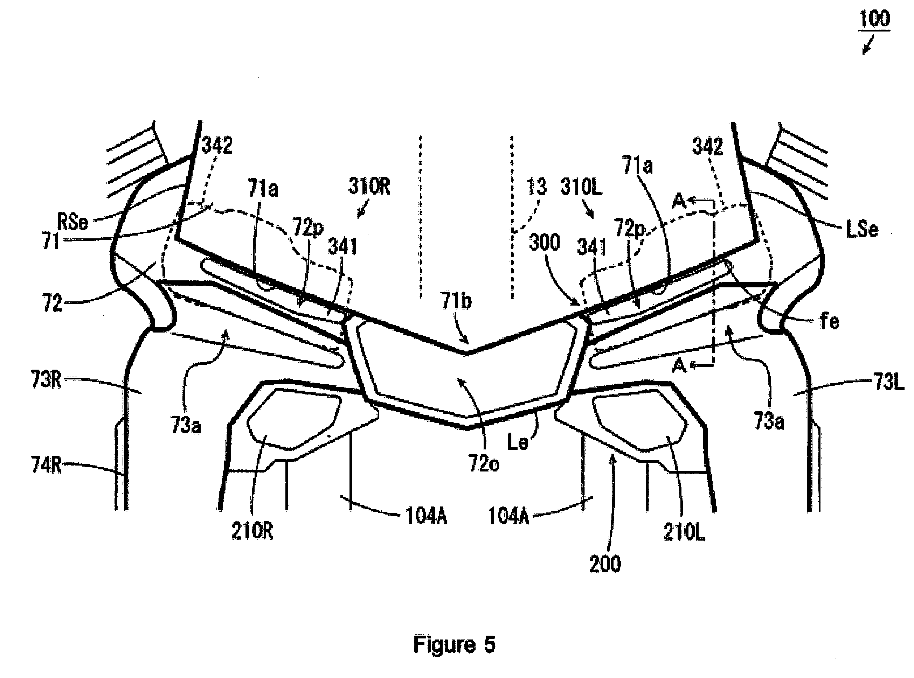

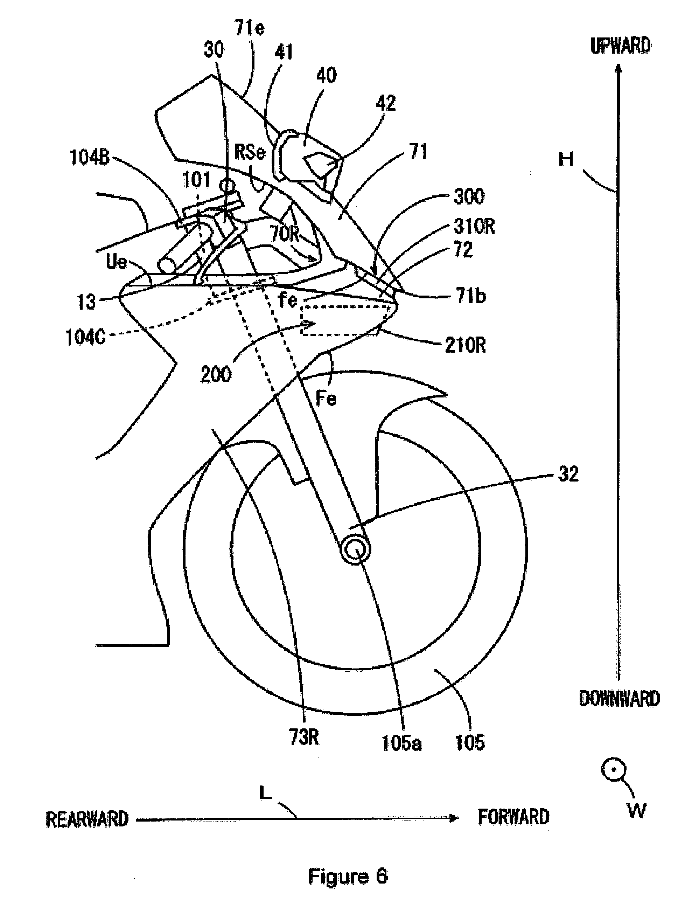

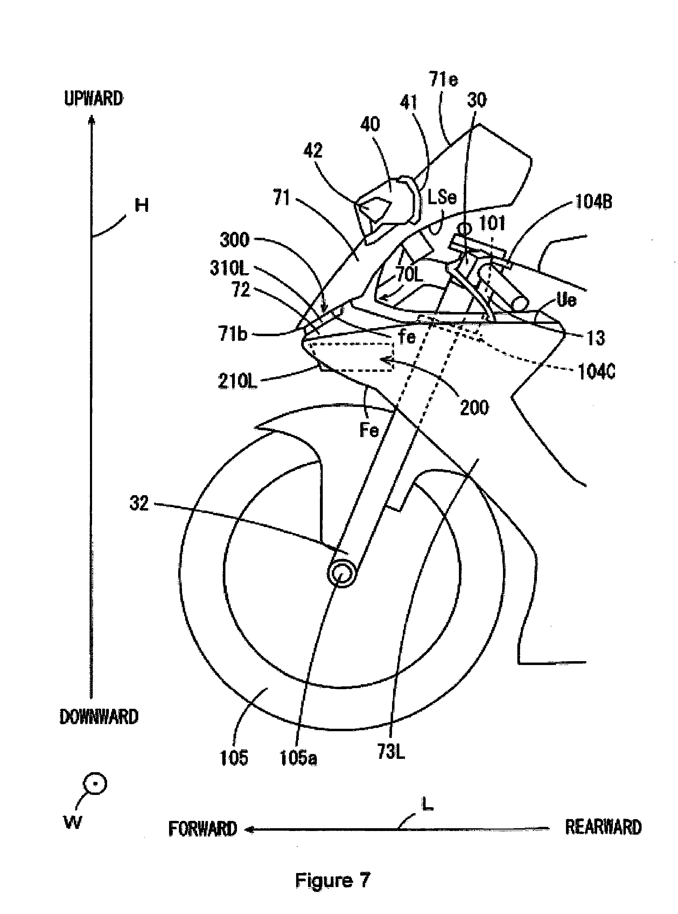

Figure 4 is a side view of one side of the front portion of the motorcycle 100. Figure 5 is a front view of the front portion of the motorcycle 100. Figure 6 is an enlarged side view of the right side of the front portion of the motorcycle 100. Figure 7 is an enlarged side view of the left side of the front portion of the motorcycle 100. As shown in Figures 4 and 5, the cover member 70 includes the front cover member 71, the upper cover member 72, the right under cover member 73R, the left under cover member 73L, the right side cover member 74R and the left side cover member 74L. A surface area of the front cover member 71 is larger than a total surface area of the right under cover member 73R and the left under cover member 73L in a vehicle, front view. In Figure 5, the outer shapes of the front cover member 71, the upper cover member 72, the right under cover member 73R and the left under cover member 73L are indicated by the thick solid lines.

As shown in Figure 5, a front edge fe of the front cover member 71 obliquely extends leftward and upward from the center (the front end), and obliquely extends rightward and upward from the center (the front end), in the vehicle front view. Further, as shown in Figures 6 and 7, the front edge fe of the front cover member 71 obliquely extends upward and rearward from the front end in a vehicle side view. In this case, an air stream, which is to be received by the front cover member 71 during the travelling, is more easily led upward and rearward. Thus, aerodynamic characteristics of the cover member 70 can be improved.

As shown in Figure 6, a right side edge RSe of the front cover member 71 obliquely extends to be curved rearward and upward from a rear end of the front edge fe. As shown in Figure 7, a left side edge LSe of the front cover member 71 obliquely extends to be curved rearward and upward from the other rear end of the front edge fe. Thus, the front cover member 71 obliquely extends upward and rearward from above the upper cover member 72 to cover the space above the head pipe 13 and the handle member 30 of Figure 1.

The front cover member 71 has a convex portion 71 b that projects forward at the front end in the vehicle side view and a vehicle plan view. As shown in Figures 6 and 7, the convex portion 71 b at the front end of the front cover member 71 is located at a position further forward than an axle 105a of the front wheel 105. Further, the front cover member 71 has a pair of ridge portions 71 a, namely right and left convex ridge portions 71 a, that obliquely extends upward from the convex portion 71 b towards the outer ends in the vehicle front view. In the present example, the pair of ridge portions 71 a are lower ends of the front edge fe of the front cover member 71. The pair of mirror devices 40 of Figure 1 is provided at both side portions of the front cover member 71.

As shown in Figure 6, a front edge Fe of the right under cover member 73R extends in the top-and-bottom direction. The upper end of the front edge Fe of the right under cover member 73R is curved inward, and extends substantially horizontally. As shown in Figure 7, a front edge Fe of the left under cover member 73L extends in the top-and-bottom direction. The upper end of the front edge Fe of the left under cover member 73L is curved inward, and extends substantially horizontally. An intake opening 72o of the upper cover member 72 is located between a horizontal portion of the front edge Fe of the right under cover member 73R and a horizontal portion of the front edge Fe of the left under cover member 73L. The lower ends of the right side portion and left side portion of the upper cover member 72 are connected to the upper ends of the respective right under cover member 73R and the respective left under cover member 73L behind the respective right under cover member 73R and the respective left under cover member 73L.

The right under cover member 73R is arranged to extend rearward and downward below the right ridge portion 71a of the front cover member 71. Specifically, as shown in Figure 6, the front edge Fe of the right under cover member 73R obliquely extends downward and rearward, and further extends downward in the vehicle side view. An upper edge Ue of a front portion of the right under cover member 73R substantially horizontally extends rearward from the front end.

The left under cover member 73L is arranged to extend downward and rearward below the left ridge portion 71a of the front cover member 71. Specifically, as shown in Figure 7, the front edge Fe of the left under cover member 73L obliquely extends downward and rearward, and further extends downward in the vehicle side view. An upper edge Ue of a front portion of the left under cover member 73L substantially horizontally extends rearward from the front end. Thus, the right under cover member 73R and the left under cover member 73L cover the outside of respective parts of the right and left fork tubes 104A in the width direction W.

As shown in Figure 6, a right cutout portion 70R is formed between the right side edge RSe of the front cover member 71 and the upper edge Ue of the right under cover member 73R. Further, as shown in Figure 7, a left cutout portion 70L is formed between the left side edge LSe of the front cover member 71 and the upper edge Ue of the left under cover member 73L. Thus, even when the handle member 30 is operated to the right or left to turn the front fork 104 of Figure 3A, the handle member 30 is prevented from coming into contact with the front cover member 71, the left under cover member 73L or the right under cover member 73R.

The right under cover member 73R has a groove 73a that obliquely extends rightward and upward towards the outer end of the convex portion 71 b below the right ridge portion 71 a of the front cover member 71. Further, the left under cover member 73L has a groove 73a that obliquely extends leftward and upward towards the outer end of the convex portion 71 b below the left ridge portion 71 a of the front cover member 71. The right side cover member 74R is attached to a rear portion of the right under cover member 73R, and the left side cover member 74L is attached to a rear portion of the left under cover member 73L.

While the front cover member 71, the upper cover member 72, the right under cover member 73R, the left under cover member 73L, the right side cover member 74R and the left side cover member 74L of the cover member 70 are separately formed from one another in the present example, the invention is not limited to this. Part of or all of the front cover member 71, the upper cover member 72, the right under cover member 73R, the left under cover member 73L, the right side cover member 74R and the left side cover member 74L may be integrally formed with one another.

For example, the upper cover member 72, the left under cover member 73L and the right under cover member 73R may be integrally formed with one another. The right under cover member 73R and the right side cover member 74R may be integrally formed with each other, or separately formed from each other. Similarly, the left under cover member 73L and the left side cover member 74L may be integrally formed with each other, or separately formed from each other. Further, boundaries among the front cover member 71, the upper cover member 72, the right under cover member 73R, the left under cover member 73L, the right side cover member 74R and the left side cover member 74L are not limited to the present example.

As shown in Figure 5, the intake opening 72o is formed as a recess at a central portion in the width direction W of the upper cover member 72. A lower edge Le of the upper cover member 72 extends in the substantially width direction W. The lower edge Le of the central portion of the upper cover member 72 (the intake opening 72o) is located at a position further downward than the lower edges of the right side portion and the left side portion of the central portion. The lower edge Le of the central portion of the upper cover member 72 obliquely extends upward and leftward from the center and also obliquely extends upward and rightward from the center.

Further, the upper cover member 72 is located in front of the steering shaft 101 of Figure 3B. Right and left strip-shaped openings 72p are formed at the upper cover member 72 so as to be opposite to each other with the intake opening 72o being sandwiched therebetween. In the vehicle front view, the right and left strip-shaped openings 72p obliquely extend upward and outward from respective right and left lateral sides of the intake opening 72o.

The upper cover member 72 is arranged between the front cover member 71 and each of the right under cover member 73R and the left under cover member 73L. Thus, the intake opening 72o is located between the pair of fork tubes 104A. Further, the groove 73a of the right under cover member 73R obliquely extends upward and outward from the right lateral side of the intake opening 72o. Similarly, the groove 73a of the left under cover member 73L obliquely extends upward and outward from the left lateral side of the intake opening 72o. Further, as shown in Figure 5, each of the grooves 73a of the right under cover member 73R and the left under cover member 73L obliquely extends upward and rearward in the vehicle side view.

In this case, an air stream, which is shielded by the intake opening 72o of the upper cover member 72, is led rightward and rearward along the groove 73a of the right under cover member 73R. Thereafter, the air stream is led rearward by the right under cover member 73R and the right side cover member 74R. Similarly, an air stream, which is shielded by the intake opening 72o of the upper cover member 72, is led leftward and rearward along the groove 73a of the left under cover member 73L. Thereafter, the air stream is led rearward by the left under cover member 73L and the left side cover member 74L. Thus, the aerodynamic characteristics of the cover member 70 can be improved.

Further, a large part of an air stream, which is to be received during the travelling, comes into contact with the front cover member 71 having a large surface area. Since the position lamp unit 300 is not provided at the front cover member 71 in the present invention, the shape of the front cover member 71 is not limited by the position lamp unit 300. Thus, the front cover member 71 can be configured to be in a shape specially formed for a reduction in air resistance.

The width of each groove 73a gradually increases rearward from the front of the motorcycle 100. In this case, air in front of the motorcycle 100 is efficiently led rearward. Thus, aerodynamic characteristics of the front portion of the motorcycle 100 can be more sufficiently improved.

In the vehicle front view, the right and left ridge portions 71a of the front cover member 71 obliquely extend upward and outward from the respective right and left lateral sides of the intake opening 72o of the upper cover member 72. The groove 73a of the right under cover member 73R obliquely extends upward and outward from the right lateral side of the intake opening 72o of the upper cover member 72. Similarly, the groove 73a of the left under cover member 73L obliquely extends upward and outward from the left lateral side of the intake opening 72o of the upper cover member 72.

Thus, in the vehicle, front view, a gap is formed between the front cover member 71 and each of the right under cover member 73R and the left under cover member 73L. Each of the right and left strip-shaped openings 72p of the upper cover member 72 is exposed from the gap between the front cover member 71 and each of the right under cover member 73R and the left under cover member 73L. The respective right position lamp 310R and the respective left position lamp 310L of the position lamp unit 300 are fitted into the pair of strip-shaped openings 72p. Thus, each of the right position lamp 310R and the left position lamp 310L is arranged between each ridge portion 71a and each groove 73a, and provided in the upper cover member 72 to extend along each ridge portion 71 a or each groove 73a.

In this case, the right position lamp 310R and the left position lamp 310L can lead an air stream, which is to be received by the cover member 70, rearward by hardly shielding the air stream. Further, the shape of the front cover member 71 is not limited by the right position lamp 310R or the left position lamp 310L. Thus, aerodynamic characteristics of the front cover member 71 can be more sufficiently improved. Further, since the right position lamp 310R and the left position lamp 310L are provided in the upper cover member 72, it is not necessary to provide a separate member for holding the right position lamp 310R and the left position lamp 310L. Thus, the weight of the motorcycle 100 can be reduced.

Further, the above-mentioned arrangement causes the right position lamp 310R and the left position lamp 310L to be arranged at positions spaced apart from the respective right head lamp 210R and the respective left head lamp 210L. Further, the right position lamp 310R and the left position lamp 310L are separated from the respective right head lamp 210R and the respective left head lamp 210Lwith the upper cover member 72 being interposed therebetween. Thus, it is possible to ensure conspicuousness or visibility of the right position lamp 310R and the left position lamp 310L without being affected by the light from the respective right head lamp 210R and the respective left head lamp 210L.

Similarly, the right position lamp 310R and the left position lamp 310L are arranged at positions spaced apart from the indicators or flashers 42 of the pair of mirror devices 40. Further, the right position lamp 310R and the left position lamp 310L are separated from the pair of indicators or flashers 42 with the front cover member 71 being interposed therebetween. Thus, it is possible to ensure the conspicuousness or visibility of the right position lamp 310R and the left position lamp 310L without being affected by the light from the pair of indicators or flashers 42.

Further, in the present example, the right position lamp 310R and the left position lamp 310L are provided at positions further upward from the pair of grooves 73a. In this case, the right position lamp 310R and the left position lamp 310L are arranged at relatively high positions of the motorcycle 100. Thus, the conspicuousness or visibility of the right position lamp 310R and the left position lamp 310L is more sufficiently improved.

The intake passage 80P (Figure 13) of the air duct 80 of Figure 1 is fitted into the intake opening 72o of the upper cover member 72. During the travelling of the motorcycle 100, air, which flows into the air duct 80 through the intake opening 72o and the intake passage 80P (Figure 13), is led to the engine 20 through the intake passage 13P of the head pipe 13 (Figure 13) and the air cleaner 112. Thus, a supercharging effect is acquired, and high output power is generated.

When an intake valve or a throttle valve of the engine 20 is in an open state, the above-mentioned configuration causes air around the intake opening 72o of the upper cover member 72 to be led to the engine 20 by the air duct 80. On the other hand, when the intake valve and the throttle valve of the engine 20 are in a closed state, air around the intake opening 72o is led upward and rearward of the intake opening 72o along the front cover member 71. Alternatively, air around the intake opening 72o is led outward and rearward from the right and left sides of the intake opening 72o along the pair of grooves 73a of the right under cover member 73R and the left under cover member 73L. Thus, air can be supplied to the engine 20 while the aerodynamic characteristics of the front portion of the motorcycle 100 are improved.

### Position Lamp Unit

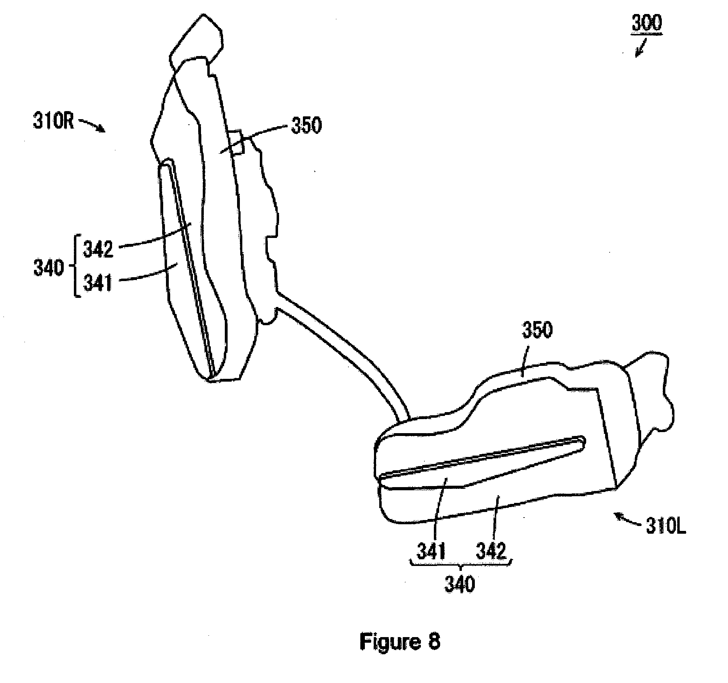

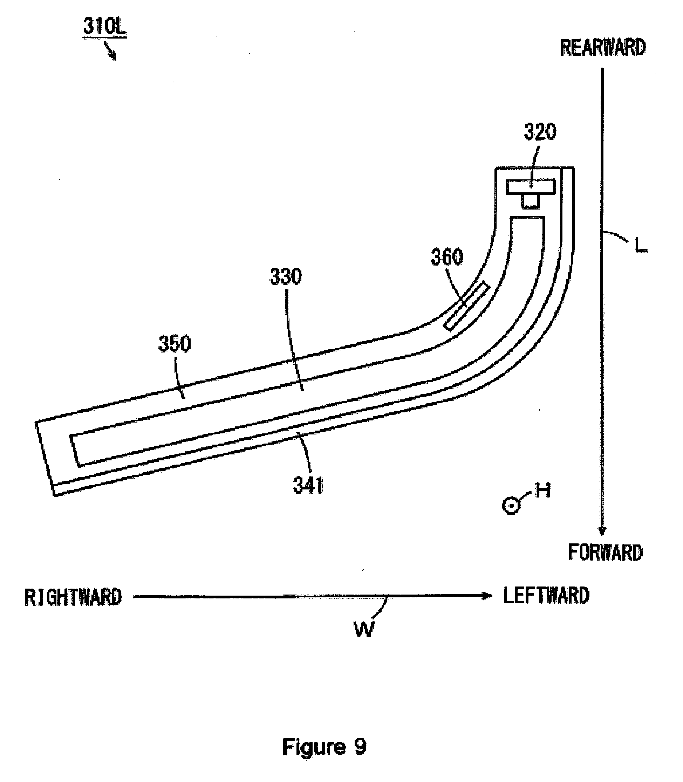

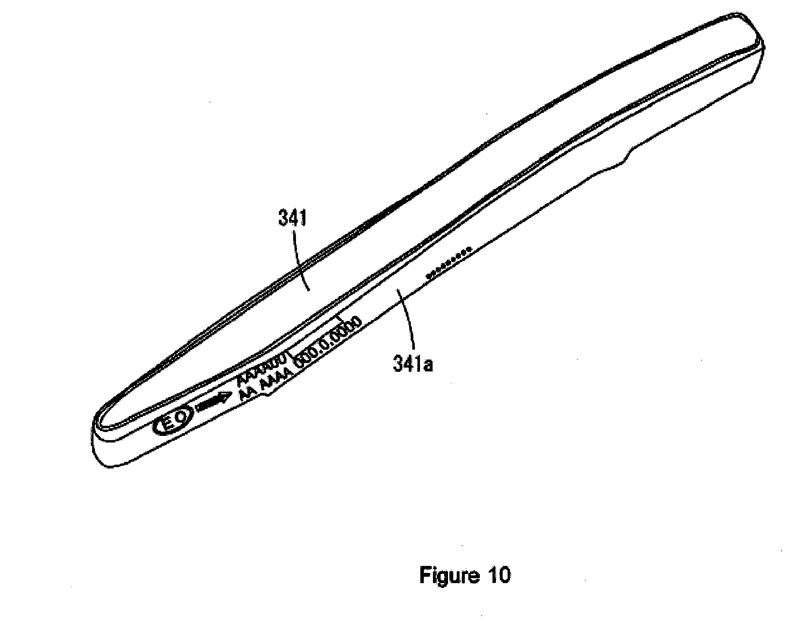

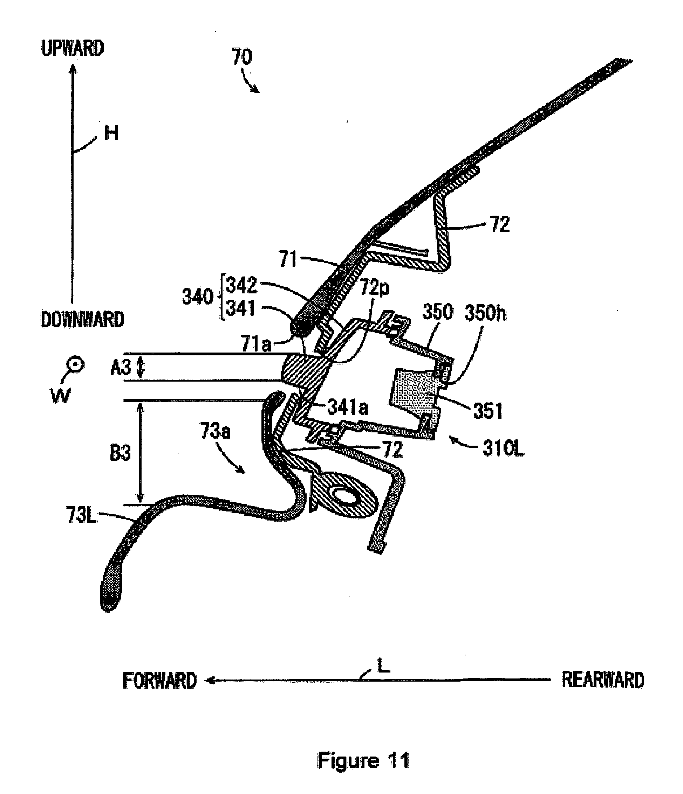

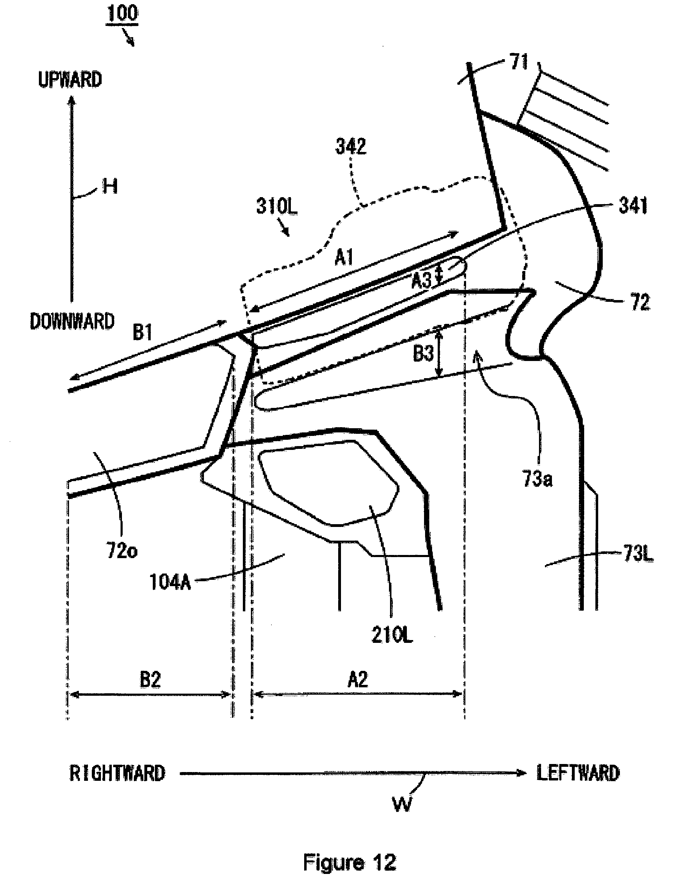

Figure 8 is a perspective view of the position lamp unit 300. Figure 9 is a schematic diagram showing the configuration of the left position lamp 310L. Figure 10 is a perspective view of a light-transmitting portion of Figure 8. Figure 11 is a cross sectional view taken along the line A-A of the left position lamp 310L of Figure 5. Figure 12 is an enlarged front view of the motorcycle 100 showing the left position lamp 310L and its periphery. In the present embodiment, the right position lamp 310R has a laterally symmetric configuration with the left position lamp 310L of Figures 9 and 11.

As shown in Figures 8 and 9, the left position lamp 310L includes a light source 320, a light-guiding member 330, an outer lens 340, a holding member 350 and a lamp driving portion 360. For example, the light source 320 can be an LED (a light-emitting diode).

The outer lens 340 is constituted by or includes a light-transmitting portion 341 and a cover portion 342. In the present embodiment, the light-transmitting portion 341 and the cover portion 342 have a light-transmitting property and are integrally formed with each other. The light-transmitting portion 341 projects forward from the cover portion 342. The light transmitting portion 341 is provided to cover the light source 320 and the light-guiding member 330, and transmit the light led by the light-guiding member 330.

As shown in Figures 10 and 11, a character description space 341 a is provided on the side surface (the lower surface in the present example) of the light transmitting portion 341. One or more characters, such as an authorization mark, can be engraved in the character description space 341 a. The character description space 341 a may be provided on both or one of the right position lamp 310R and the left position lamp 310L.

The holding member 350 is formed of resin, for example. The cover portion 342 of the outer lens 340 is fitted into the holding member 350. Thus, a space is formed between the outer lens 340 and the holding member 350. As shown in Figure 11, an opening 350h through which a wiring and the like can be inserted is formed on the back surface of the holding member 350. A grommet 351 is fitted into the opening 350h of the holding member 350. Thus, waterproofness of the above-mentioned space is maintained.

The holding member 350 holds the light source 320 and the light-guiding member 330, and holds the outer lens 340 at the upper cover member 72 of Figure 5. The light source 320 is arranged at one end of the holding member 350. The light-guiding member 330 is arranged to extend from the light source 320 to the other end of the holding member 350. The light-guiding member 330 leads the light generated by the light source 320 to the other end while emitting the light forward of the holding member 350.

This configuration enables the size of each of the light-emitting areas of the right position lamp 310R and the left position lamp 310L to be increased as a result of the small number (one in the present example) of light sources 320. Thus, the weight of the right position lamp 310R and the left position lamp 310L can be reduced, and the electric power consumed by the right position lamp 310R and the left position lamp 310L can be reduced.

The lamp driving portion 360 is arranged in the space between the outer lens 340 and the holding member 350. The lamp driving portion 360 includes a switching element, such as a relay. The lamp driving portions 360 control to turn on and off the right position lamp 310R and the left position lamp 310L, respectively. In the present example, the position lamp unit 300 has a fade-out function. The lamp driving portions 360 gradually turn off the respective right position lamp 310R and the respective left position lamp 310L, when receiving turn-off instruction for the respective right position lamp 310R and the respective left position lamp 310L from the rider. Thus, conspicuousness or visibility of the motorcycle 100 can be ensured for a certain time period after the turn-off instruction is received.

As shown in Figure 11, the light-transmitting portion 341 of the outer lens 340 is fitted into the strip-shaped opening 72p of the upper cover member 72. Thus, the light-transmitting portion 341 is arranged between each ridge portion 71 a and each groove 73a (see, e.g. in Figure 4). In this state, the right position lamp 310R and the left position lamp 310L are held at the upper cover member 72 by the holding member 350 to extend along each ridge portion 71a or each groove 73a. In the vehicle plan view, the cover portion 342 of the outer lens 340 and the holding member 350 are arranged to overlap with the upper cover member 72 behind the upper cover member 72. In the examples of Figures 5 and 12, the contours of the cover portions 342 are indicated by the dotted lines.

In this case, directivity is applied to the light emitted from the light-guiding member 330 by the light-transmitting portion 341 without limitation to the shapes of the front cover member 71, the right under cover member 73R and the left under cover member 73L. As a result, the conspicuousness or visibility of the right position lamp 310R and the left position lamp 310L can be more sufficiently improved. Further, the holding members 350 can hold the position lamp unit 300 at the upper cover member 72 without reductions in conspicuousness or visibility and aerodynamic characteristics of the right position lamp 310R and the left position lamp 310L.

As shown in Figure 12, in the vehicle front view, a length A1 of the light-transmitting portion 341 of the left position lamp 310L is larger than a length B1 from the center of the intake opening 72o to one side edge (the right edge) in a direction in which the groove 73a of the left under cover member 73L extends. As shown in Figure 12, in the vehicle front view, a length A2 of the light-transmitting portion 341 of the left position lamp 310L is larger than a length B2 from the center of the intake opening 72o to the one side edge (the right edge) in the width direction W.

As shown in Figures 11 and 12, in the vehicle front view, a width A3 of the light-transmitting portion 341 of the left position lamp 310L is smaller than a width B3 of the groove 73a of the left under cover member 73L in the top-and-bottom direction H. While the width B3 of the groove 73a of the left under cover member 73L gradually increases rearward from the front of the motorcycle 100, the width A3 is smaller than the width B3 at a position on any longitudinal cross section.

Similarly, in the vehicle front view, a length A1 of the light-transmitting portion 341 of the right position lamp 310R is larger than a length B1 from the center of the intake opening 72o to the other side edge (the left edge) in a direction in which the groove 73a of the right under cover member 73R extends. In the vehicle front view, a length A2 of the light-transmitting portion 341 of the right position lamp 310R is larger than a length B2 from the center of the intake opening 72o to the other side edge (the left edge) in the width direction W.

In the vehicle front view, a width A3 of the light-transmitting portion 341 of the right position lamp 310R is smaller than a width B3 of the groove 73a of the right under cover member 73R in the top-and-bottom direction H. While the width B3 of the groove 73a of the right under cover member 73R gradually increases rearward from the front of the motorcycle 100, the width A3 is smaller than the width B3 at a position on any longitudinal cross section.

In this case, the right position lamp 310R is sufficiently small in the top-and-bottom direction H, and sufficiently large in the width direction W and the direction in which the groove 73a of the right under cover member 73R extends. Similarly, the left position lamp 310L is sufficiently small in the top-and-bottom direction H and sufficiently large in the width direction W and the direction in which the groove 73a of the left under cover member 73L extends. Thus, the conspicuousness or visibility of the right position lamp 310R and the left position lamp 310L can be improved while good aerodynamic characteristics of the right position lamp 310R and the left position lamp 310L are maintained.

### Attaching Structure of Cover Member

Figures 13 to 17 are perspective views showing the assembly steps of the front portion of the motorcycle 100. As shown in Figure 13, a square-tube intake guide 110 is attached to the front of the head pipe 13. The intake guide 110 is provided to open forward and rearward. Further, an intake guide 111 is attached to the back of the head pipe 13 to be connected to the intake guide 110. The intake passage 13P leading air rearward from the front of the head pipe 13 is formed by the intake guides 110, 111.

The air duct 80 is connected to the intake guide 110, and an inlet port of the air cleaner 112 of Figure 1 is connected to the intake guide 111. Thus, air that flows into the air duct 80 is smoothly led to the air cleaner 112 through the intake passage 13P.

The air duct 80 is constituted by or includes a duct main body 81 and a duct tip end 89. The duct main body 81 is a tubular member having a rectangular cross section, which obliquely extends upward and forward, and further obliquely extends downward and forward. The duct tip end 89 is attached to the front end of the duct main body 81.

The duct tip end 89 is a cylindrical member having a rectangular cross section, and obliquely extends downward and forward. The length in the front-and-rear direction L of the duct tip end 89 is shorter than the length in the front-and-rear direction L of the duct main body 81. The duct main body 81 is formed of a glass fiber-reinforced resin, for example, and the duct tip end 89 is formed of rubber, for example. The inner space of the duct main body 81 and the inner space of the duct tip end 89 function as the intake passage 80P for leading air to the engine 3, respectively.

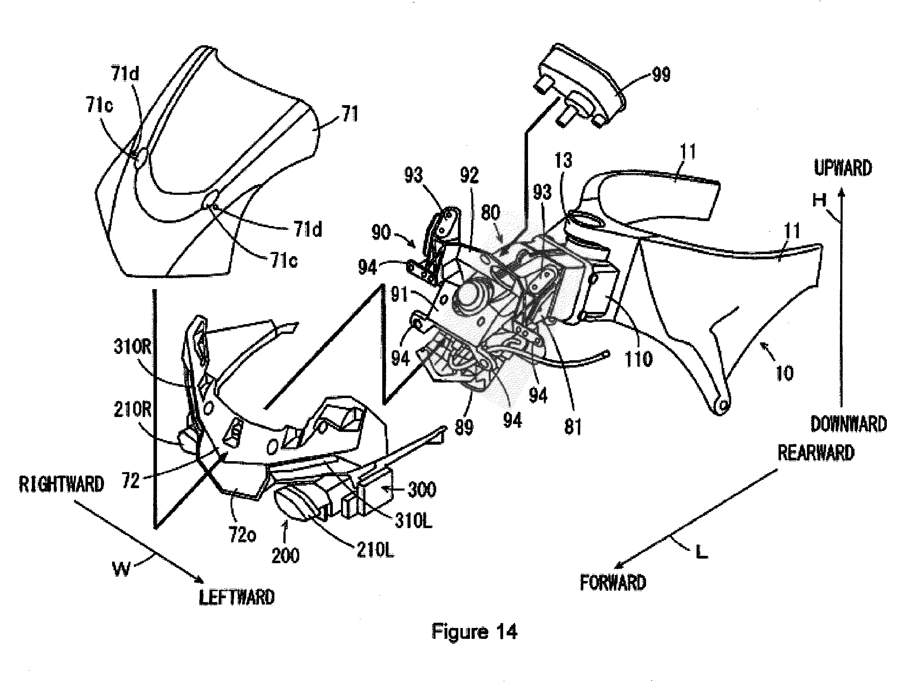

As described above, the rear end of the duct main body 81 is connected to the intake guide 110. A stay 90 is attached to the duct main body 81. The stay 90 supports the pair of mirror devices 40, and a meter unit 99 (Figure 14) that is described below. In this manner, the air duct 80 and the stay 90 are integrally fixed to the body frame 10.

The stay 90 is formed of a glass fiber-reinforced resin, for example. The stay 90 has a duct attachment portion 91, an upstanding portion 92, a pair of mirror device fixing portions 93, namely right and left mirror device fixing portions 93 and a plurality of (four in the present example) of lamp fixing portions 94.

The duct attachment portion 91 is attached to the upper surface of the duct main body 81 by the attachment of the stay 90 to the air duct 80. The upstanding portion 92 projects upward from the rear end of the duct attachment portion 91. The right and left mirror device fixing portions 93 are respectively located at the right and left of the upstanding portion 92. Two through holes through which two bolts pass are formed in each mirror device fixing portion 93.

Two lamp fixing portions 94 are located at the right and left of the front end of the duct attachment portion 91. The two lamp fixing portions 94 are located below the respective right and left mirror device fixing portions 93.

As shown in Figure 14, the upper cover member 72, the head lamp unit 200 and the position lamp unit 300 are attached to the plurality of lamp fixing portions 94 of the stay 90.

The lower end of the front cover member 71 of Figure 1 is attached to the front end of the upper cover member 72. A pair of mirror fixing holes 71 c, namely right and left mirror fixing holes 71c and a pair of wiring holes 71d, namely right and left wiring holes 71d are formed in the front cover member 71. The front cover member 71 is attached to the upper cover member 72, so that the right and left mirror fixing holes 71c overlap with the respective right and left mirror device fixing portion 93 of the stay 90,. Thus, the right and left mirror device fixing portions 93 are exposed on the upper surface of the front cover member 71.

The meter unit 99 is attached to the upstanding portion 92 of the stay 90 from behind. The meter unit 99 has a configuration in which a speed meter and a tachometer, for example, are stored in a casing.

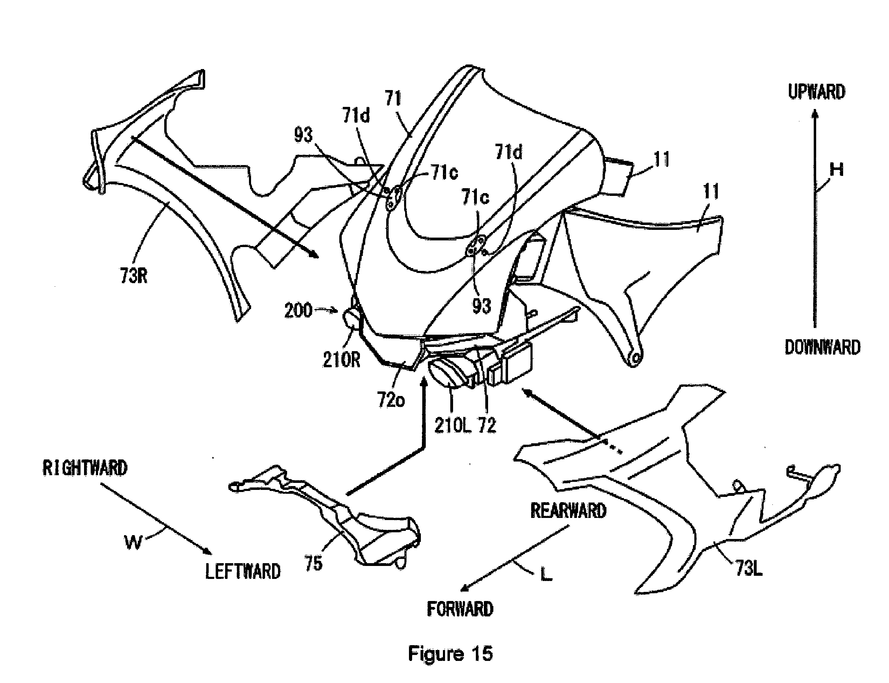

As shown in Figure 15, the left under cover member 73L and the right under cover member 73R are attached to a respective left side portion and a respective right side portion of the upper cover member 72. Further, a head lamp cover 75 is attached to a lower portion of the head lamp unit 200 to cover parts of the upper cover member 72 and the head lamp unit 200 from below.

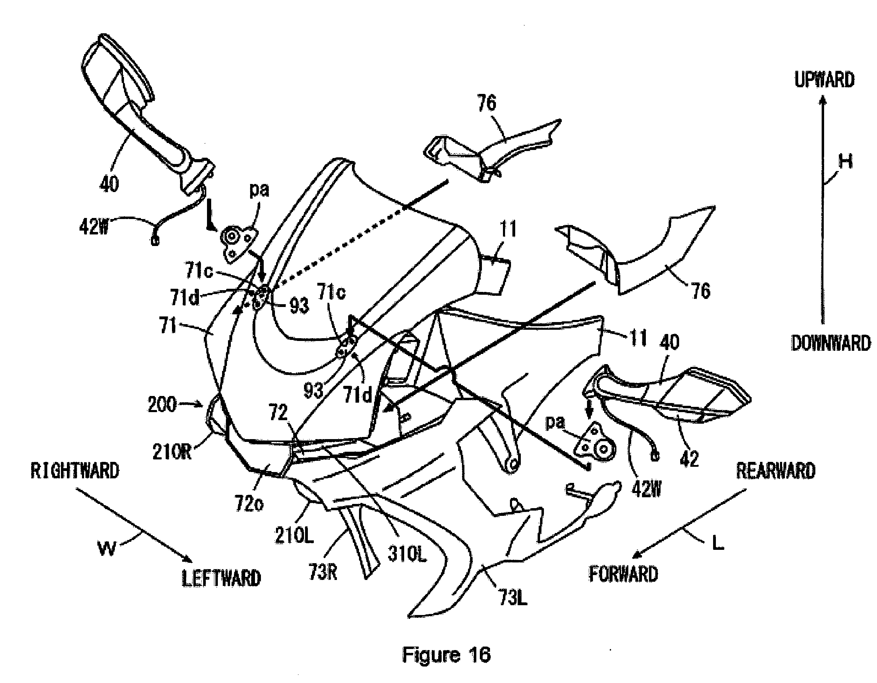

As shown in Figure 16, the right and left mirror devices 40 are attached to the respective right and left mirror device fixing portions 93, which are exposed through the mirror fixing holes 71c of the front cover member 71 with packing members pa made of rubber being sandwiched therebetween. At this time, a wiring 42W of the indicator or flasher 42 extending from the lower end of each mirror device 40 is put through each wiring hole 71d of the front cover member 71.

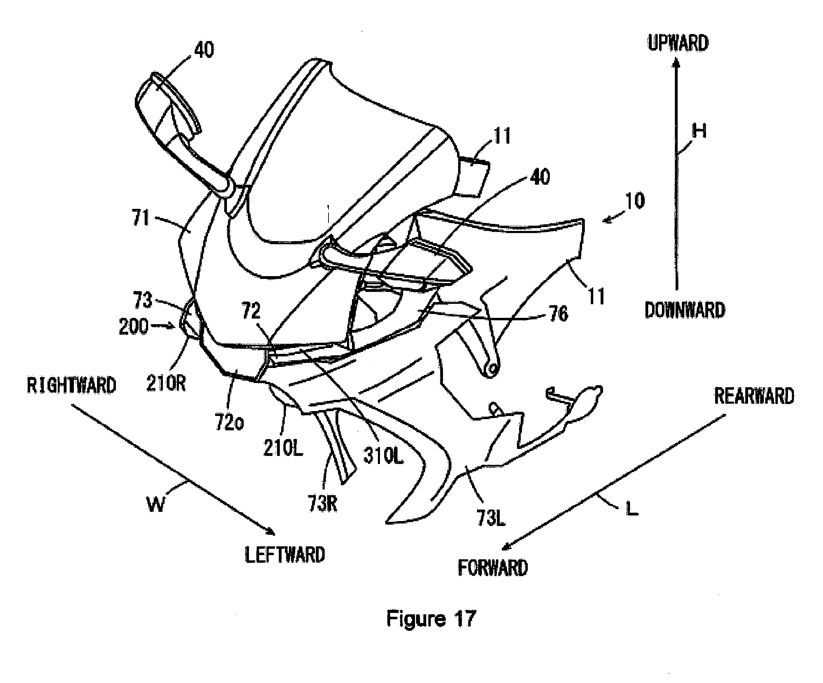

Further, in the present example, a pair of inner covers 76 is attached to the outer portions of the upper cover member 72 in the width direction W to cover at least parts of the respective right position lamp 310R and the respective left position lamp 310L from behind. The front portion of the motorcycle 100 is assembled as described above. Thus, as shown in Figure 17, each of constituent elements that constitutes or is included in the front portion of the motorcycle 100 is fixed to the body frame 10.

### Effects

In the present embodiment, each of the light-transmitting portions 341 of the right position lamp 310R and the left position lamp 310L has a long thin shape. Thus, a light-emitting region that is small in the top-and-bottom direction H and large in the width direction W can be ensured. Thus, light-emitting areas of the right position lamp 310R and the left position lamp 310L can be larger than the light-emitting areas of conventional position lamps. Further, because the size of the light-emitting areas of the right position lamp 310R and the left position lamp 310L is increased in the width direction W, the size of the right position lamp 310R and the left position lamp 310L can be reduced in the top-and-bottom direction H. In particular, in the present embodiment, each of the light sources of the right position lamp 310R and the left position lamp 310L is an LED. Therefore, the size in the top-and-bottom direction H of the right position lamp 310R and the left position lamp 310L can be more sufficiently reduced while a reduction in conspicuousness or visibility is inhibited.

In the configuration of the conventional motorcycle, when the cover member has a recess such as an intake opening, an air stream that is to be received during the travelling, is shielded by the recess, so that aerodynamic characteristics are easily reduced. In contrast, in the present embodiment, an air stream that is shielded by the intake opening 72o, is easily led rearward of the motorcycle 100 from the width direction W of the intake opening 72o by the grooves 73a of the right under cover member 73R and the left under cover member 73L. Therefore, even when the upper cover member 72 has the intake opening 72o, air resistance during the travelling is reduced, so that a reduction in aerodynamic characteristics can be inhibited.

Further, the front cover member 71 extends from a position further forward than the intake opening 72o of the upper cover member 72 to a position further upward and rearward than the intake opening 72o in the vehicle side view, and extends upward, rightward and leftward from a position in front of the intake opening 72o in the vehicle front view. Therefore, an air stream that is directed to the intake opening 72o during the travelling, is easily led rearward from above. Thus, even when the upper cover member 72 has the intake opening 72o, the air resistance during the travelling is reduced, so that a reduction in aerodynamic characteristics can be inhibited.

Further, each of the light-transmitting portions 341 of the right position lamp 310R and the left position lamp 310L has a long thin shape that is small in the top-and-bottom direction H and large in the width direction W. Therefore, the right position lamp 310R and the left position lamp 310L have high conspicuousness or visibility and good aerodynamic characteristics. Such right position lamp 310R is arranged below the front cover member 71 and above the right groove 73a, and provided at the upper cover member 72 to extend upward and rightward. Further, the left position lamp 310L is arranged below the front cover member 71 and above the left groove 73a, and is provided at the upper cover member 72 to extend upward and leftward. That is, the right position lamp 310R and the left position lamp 310L are provided to extend along the front edge fe of the front cover member 71.

Therefore, the right position lamp 310R and the left position lamp 310L can lead an air stream that is to be received by the cover member 70, rearward by hardly shielding the air stream. Thus, the position lamp unit 300 having high conspicuousness or visibility and good aerodynamic characteristics can be arranged at the cover member 70 while a reduction in aerodynamic characteristics of the motorcycle 100 is inhibited. Further, since the position lamp unit 300 can be arranged closer to the center of the vehicle, conspicuousness or visibility can be improved.

In this manner, the more conspicuous or visible position lamp unit 300 is arranged at a more conspicuous or visible position while a reduction in aerodynamic characteristics is inhibited. As a result, the motorcycle 100 can give a unique impression.

### Other Embodiments

(a) While the motorcycle 100 is described as one example of a saddle-ride or straddle-type vehicle, such as a saddle-straddling type motor vehicle in the above-mentioned embodiment, the invention is not limited to this. The present invention may be applied to another vehicle such as a motor tricycle, moped, scooter, snow-mobile or an All Terrain Vehicle (ATV).
(b) While the intake opening 72o is formed at the front end of the upper cover member 72 in the above-mentioned embodiment, the invention is not limited to this. A recess, which is concaved, recessed, indented or dented rearward, may be formed at the upper cover member 72 instead of the intake opening 72o.
(c) While the right position lamp 310R has a laterally symmetric configuration with the left position lamp 310L in the above-mentioned embodiment, the invention is not limited to this. The right position lamp 310R may have a laterally asymmetric configuration with the left position lamp 310L. Similarly, the right and left parts of the front fork 104 may have a laterally asymmetric configuration with each other, and the right and left parts of the cover member 70 may have a laterally asymmetric configuration with each other.

### Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the head pipe 13 is an example of a head pipe, the steering shaft 101 is an example of a steering shaft and the handle member 30 is an example of a handle member. The front fork 104 is an example of a front fork, the front wheel 105 is an example of a front wheel, the engine 20 is an example of an engine and the cover member 70 is an example of a cover member. The position lamp unit 300 is an example of a position lamp unit, the intake opening 72o is an example of a recess, the front cover member 71 is an example of a front cover member and the groove 73a is an example of a right groove and a left groove.

The light-transmitting portion 341 is an example of a right light-transmitting member and a left light-transmitting member, the motorcycle 100 is an example of a saddle-ride or straddle-type vehicle, such as a saddle-straddling type motor vehicle, and the head lamp unit 200 is an example of a head lamp unit. The right under cover member 73R is an example of a right under cover member, and the left under cover member 73L is an example of a left under cover member. The right side cover member 74R is an example of a right side cover member, the left side cover member 74L is an example of a left side cover member, the holding member 350 is an example of a holding member and the air duct 80 is an example of an air duct. The intake passage 80P is an example of an intake passage, the outer lens 340 is an example of an outer lens, the light source 320 is an example of a right light source and a left light source, and the light-guiding member 330 is an example of a right light-guiding member and a left light-guiding member.

As each of constituent elements recited in the claims, various other elements having configurations or functions described in the claims can be also used.

The present invention can be effectively utilized for various saddle-straddling type motor vehicles including position lamps.

It will be appreciated that the embodiment of the invention hereinbefore described is given by way of example only, and is not meant to be limiting of the scope of the invention.

It will be appreciated that the term straddle-type vehicle or motor vehicle used herein, and as used in the art, is meant to include the following terms also used in the art:
saddled vehicle, saddle-ride type vehicle or motor vehicle, saddle-straddling type vehicle or motor vehicle, and includes:
   motorcycles and motorbikes as well as motor tricycles and All-Terrain Vehicles (ATVs), scooters, mopeds and snow mobiles.

## Claims

1. A saddle-ride or straddle-type vehicle (100), such as a saddle-straddling type motor vehicle, comprising:
a head pipe (13);
a cover member (70) arranged in front of the head pipe (13); and
a position lamp unit (300) arranged at the cover member (70), wherein
the cover member (70) has a recess (72o) that is arranged at a center of the vehicle (100) and is concave or dented rearward of the vehicle (100),
a front cover member (71) that extends from a position further forward than an opening of the recess to a position further upward and rearward than the opening in a vehicle side view, and extends upward, rightward and leftward from a position in front of the opening of the recess (72o) in a vehicle front view,
a right groove (73a) that is formed to be located at a position further rightward than the recess (72o) and to extend rightward, and is concave or dented towards an inside of the vehicle (100), and
a left groove (73a) that is formed to be located at a position further leftward than the recess (72o) and to extend leftward, and is concave or dented towards an inside of the vehicle (100), wherein
the position lamp unit (300) has a right light-transmitting member that has a length larger in a right-and-left direction than a length in a top-and-bottom direction, has a light-transmitting property and is provided at the cover member (70) to be located below the front cover member (71) and to extend upward and rightward, and
a left light-transmitting member that has a length larger in the right-and-left direction than a length in the top-and-bottom direction, has the light-transmitting property and is provided at the cover member (70) to be located below the front cover member (71) and to extend upward and leftward, and wherein
the right groove (73a) and the left groove (73a) are provided at positions further downward than the respective right light-transmitting member and left light-transmitting member, and
the saddle-ride or straddle-type vehicle being **characterised in that** it further comprises a head lamp unit (200) provided at a position further downward than the position lamp unit (300) and at least part of the cover member (70) is arranged between the position lamp unit (300) and the head lamp unit (200).

2. The vehicle (100) according to claim 1, wherein
a front edge of the front cover member (71) obliquely extends upward from a position further outward than a center in one direction and obliquely extends upward from a position further outward than the center in another direction in the vehicle front view.

3. The vehicle (100) according to claims 1 or 2, wherein the cover member (70) further comprises:
a right under cover member (73R) that is arranged below the front cover member (71), includes the right groove (73a) and extends downward and rearward from the opening of the recess (72o) of the front cover member (71) in the vehicle side view;
a left under cover member (73L) that is arranged below the front cover member (71), includes the left groove (73a) and extends downward and rearward from the opening of the recess (72o) of the front cover member (71) in the vehicle side view;
a right side cover member (74R) that is attached to the right under cover member (73R), and arranged outside of at least part of an engine to extend rearward from the right under cover member (73R); and
a left side cover member (74L) that is attached to the left under cover member (73L), and arranged outside of at least part of the engine to extend rearward from the left under cover member (73L), wherein
a surface area of the front cover member (71) is larger than a total surface area of the right under cover member and the left under cover member in the vehicle front view,
the right light-transmitting member is provided to extend along the right groove between the front cover member and the right groove, and
the left light-transmitting member is provided to extend along the left groove between the front cover member and the left groove.

4. The vehicle (100) according to any one of claims 1 to 3, wherein
the position lamp unit (300) includes holding members (350) that hold the respective right light-transmitting member and the respective left light-transmitting member at the cover member, and wherein
the holding members (350) of the position lamp unit (300) are arranged to overlap with at least part of the front cover member (71), the right groove (73a) and the left groove (73a) behind the front cover member (71), the right groove (73a) and the left groove (73a) in the vehicle front view.

5. The vehicle (100) according to any one of claims 1 to 4, wherein
a length of the right light-transmitting member is larger than a length from a center of the front cover member (71) to one side edge of the opening of the recess (72o) in a direction in which the right groove (73a) extends in the vehicle front view,
a length of the right light-transmitting member is larger than a length from the center of the front cover member (71) to the one side edge of the opening of the recess (72o) in the right-and-left direction in the vehicle front view,
a width of the right light-transmitting member is smaller than a width of the right groove (73a) in the top-and-bottom direction in the vehicle front view,
a length of the left light-transmitting member is larger than a length from the center of the front cover member (71) to another side edge of the opening of the recess (72o) in a direction in which the left groove (73a) extends in the vehicle front view,
a length of the left light-transmitting member is larger than a length from the center of the front cover member (71) to the other side edge of the opening of the recess (72o) in the right-and-left direction in the vehicle front view, and
a width of the left light-transmitting member is smaller than a width of the left groove (73a) in the top-and-bottom direction in the vehicle front view.

6. The vehicle (100) according to any one of claims 1 to 5, further comprising an air duct (80) that is arranged in front of the head pipe (13) and leads air to an engine (20), wherein
the opening of the recess (72o) includes an intake passage (80P) of the air duct (80).

7. The vehicle, (100) according to any one of claims 1 to 6, wherein
each of the right light-transmitting member and the left light-transmitting member is provided as part of an outer lens (340).

8. The vehicle (100) according to any one of claims 1 to 7, wherein
a width in the top-and-bottom direction of each of the right groove (73a) and the left groove (73a) gradually increases rearward in a vehicle front-and-rear direction.

9. The vehicle (100) according to any one of claims 1 to 8, wherein
the position lamp unit (300) further includes
a right light source (320) that is arranged at one end of the right light-transmitting member,
a right light-guiding member (330) that is arranged behind the right light-transmitting member, and leads light generated by the right light source (320) to another end of the right light-transmitting member while emitting the light forward,
a left light source (320) that is arranged at one end of the left light-transmitting member, and
a left light-guiding member (330) that is arranged behind the left light-transmitting member and leads light generated by the left light source (320) to another end of the left light-transmitting member while emitting the light forward.

10. The vehicle (100) according to any one of claims 1 to 9, wherein
the position lamp unit (300) has a fadeout function that gradually turns off light in response to turn-off instruction.

11. A cover member, position lamp unit and head lamp unit assembly for a saddle-ride or straddle-type vehicle (100), such as a saddle-straddling type motor vehicle according to any one of claim 1 to 10, the assembly comprising:
a cover member (70) configured for arrangement in front of a head pipe (13) of the vehicle (100); and
a position lamp unit (300) arranged at the cover member (70), wherein
the cover member (70) has a recess (72o) that is arrangable at a center of the vehicle (100) and is arranged to be concave or dented rearward of the vehicle (100),
a front cover member (71) that extends from a position further forward than an opening of the recess (72o) to a position further upward and rearward than the opening in a vehicle side view, and is arranged to extend upward, rightward and leftward from a position in front of the opening of the recess (72o) in a vehicle front view,
a right groove (73a) that is formed to be located at a position further rightward than the recess (72o) and to extend rightward, and is arranged to be concave, recessed, indented or dented towards an inside of the vehicle (100), and
a left groove (73a) that is formed to be located at a position further leftward than the recess (72o) and to extend leftward, and is arranged to be concave or dented towards an inside of the vehicle (100), wherein
the position lamp unit (300) has a right light-transmitting member that has a length larger in a right-and-left direction than a length in a top-and-bottom direction, has a light-transmitting property and is provided at the cover member (70) to be located below the front cover member (71) and to extend upward and rightward, and
a left light-transmitting member that has a length larger in the right-and-left direction than a length in the top-and-bottom direction, has the light-transmitting property and is provided at the cover member (70) to be located below the front cover member (71) and to extend upward and leftward, and wherein
the right groove (73a) and the left groove (73a) are provided at positions further downward than the respective right light-transmitting member and left light-transmitting member, and
the assembly being **characterised in that** it further comprises a head lamp unit (200) provided at a position further downward than the position lamp unit (300) and at least part of the cover member (70) is arranged between the position lamp unit (300) and the head lamp unit (200).

12. A method of assembling or arranging a saddle-ride or straddle-type vehicle (100), such as a saddle-straddling type motor vehicle, the method comprising:
providing a head pipe (13), a cover member (70), a position lamp unit (300) and a head lamp unit (200);
arranging the cover member in front of the head pipe (13);
arranging the position lamp unit (300) at the cover member (70), wherein
the cover member (70) has a recess (72o), wherein the method comprises:
arranging the recess (72o) at a center of the vehicle (100), wherein the recess is concave or dented rearward of the vehicle,
providing a front cover member (71) to extend from a position further forward than an opening of the recess (72o) to a position further upward and rearward than the opening in a vehicle side view, and to extend upward, rightward and leftward from a position in front of the opening of the recess (72o) in a vehicle front view,
forming a right groove (73a) to be located at a position further rightward than the recess (72o) and to extend rightward, and is concave or dented towards an inside of the vehicle (100), and
forming a left groove (73a) to be located at a position further leftward than the recess (72o) and to extend leftward, and is concave or dented towards an inside of the vehicle (100), wherein
the position lamp unit (300) has a right light-transmitting member that has a length larger in a right-and-left direction than a length in a top-and-bottom direction, has a light-transmitting property, and
a left light-transmitting member that has a length larger in the right-and-left direction than a length in the top-and-bottom direction, has the light-transmitting property, wherein the method comprises:
providing the right light-transmitting member at the cover member (70) to be located below the front cover member (71) and to extend upward and rightward,
providing the left light-transmitting member at the cover member (70) to be located below the front cover member (71) and to extend upward and leftward, and
providing the right groove (73a) and the left groove (73a) at positions further downward than the respective right light-transmitting member and left light-transmitting member, and
providing the head lamp unit (200) at a position further downward than the position lamp unit (300) such that at least part of the cover member (70) is arranged between the position lamp unit (300) and the head lamp unit (200).

## Patentansprüche

1. Fahrzeug (100) mit Sattelsitz oder des Reitsitztyps, wie zum Beispiel ein Motorfahrzeug des Sattelreittyps, das Folgendes umfasst:
ein Kopfrohr (13);
ein vor dem Kopfrohr (13) angeordnetes Abdeckelement (70); und
eine an dem Abdeckelement (70) angeordnete Positionslampeneinheit (300), wobei
das Abdeckelement (70) eine Aussparung (72o) hat, die in einer Mitte des Fahrzeugs (100) angeordnet und in Rückwärtsrichtung des Fahrzeugs (100) konkav oder eingelassen ist,
ein vorderes Abdeckelement (71), das von einer Position weiter vorne als eine Öffnung der Aussparung zu einer Position weiter oben und hinten als die Öffnung in einer Seitenansicht des Fahrzeugs verläuft und das nach oben, nach rechts und nach links von einer Position vor der Öffnung der Aussparung (72o) in einer Frontansicht des Fahrzeugs verläuft,
eine rechte Rille (73a), die so ausgebildet ist, dass sie sich an einer Position weiter rechts befindet als die Aussparung (72o) und nach rechts verläuft und in Richtung auf eine Innenseite des Fahrzeugs (100) konkav oder eingelassen ist, und
eine linke Rille (73a), die so ausgebildet ist, dass sie sich an einer Position weiter links befindet als die Aussparung (72o) und nach links verläuft und in Richtung auf eine Innenseite des Fahrzeugs (100) konkav oder eingelassen ist, wobei
die Positionslampeneinheit (300) ein rechtes lichtdurchlässiges Element hat, dessen Länge in einer Rechts-Links-Richtung größer ist als eine Länge in einer Oben-Unten-Richtung, eine lichtdurchlässige Eigenschaft hat und so an dem Abdeckelement (70) angeordnet ist, dass sie sich unterhalb des vorderen Abdeckelements (71) befindet und nach oben und nach rechts verläuft, und
ein linkes lichtdurchlässiges Element, dessen Länge in der Rechts-Links-Richtung größer ist als eine Länge in der Oben-Unten-Richtung, das eine lichtdurchlässige Eigenschaft hat und so an dem Abdeckelement (70) vorgesehen ist, dass es sich unterhalb des vorderen Abdeckelements (71) befindet und nach oben und nach links verläuft, und wobei
die rechte Rille (73a) und die linke Rille (73a) an Positionen weiter unten als das jeweilige rechte lichtdurchlässige Element und das linke lichtdurchlässige Element vorgesehen sind, und
das Fahrzeug mit Sattelsitz oder des Reitsitztyps **dadurch gekennzeichnet ist, dass** es ferner eine Scheinwerfereinheit (200) umfasst, die an einer Position weiter unten angeordnet ist als die Positionslampeneinheit (300), und wenigstens ein Teil des Abdeckelements (70) zwischen der Positionslampeneinheit (300) und der Scheinwerfereinheit (200) angeordnet ist.

2. Fahrzeug (100) nach Anspruch 1, wobei
ein vorderer Rand des vorderen Abdeckelements (71) schräg nach oben von einer Position weiter außen als eine Mitte in einer Richtung und schräg nach oben von einer Position weiter außen als die Mitte in einer anderen Richtung in der Frontansicht des Fahrzeugs verläuft.

3. Fahrzeug (100) nach Anspruch 1 oder 2, wobei das Abdeckelement (70) ferner Folgendes umfasst:
ein rechtes unteres Abdeckelement (73R), das unterhalb des vorderen Abdeckelements (71) angeordnet ist, die rechte Rille (73a) aufweist und von der Öffnung der Aussparung (72o) des vorderen Abdeckelements (71) in der Seitenansicht des Fahrzeugs nach unten und nach hinten verläuft;
ein linkes unteres Abdeckelement (73L), das unterhalb des vorderen Abdeckelements (71) angeordnet ist, die linke Rille (73a) aufweist und von der Öffnung der Aussparung (72o) des vorderen Abdeckelements (71) in der Seitenansicht des Fahrzeugs nach unten und nach hinten verläuft;
ein rechtes seitliches Abdeckelement (74R), das am rechten unteren Abdeckelement (73R) angebracht ist und außerhalb von wenigstens einem Teil eines Motors angeordnet ist, um vom rechten unteren Abdeckelement (73R) nach hinten zu verlaufen; und
ein linkes seitliches Abdeckelement (74L), das am linken unteren Abdeckelement (73L) angebracht ist und außerhalb von wenigstens einem Teil des Motors angeordnet ist, um vom linken unteren Abdeckelement (73L) nach hinten zu verlaufen, wobei
ein Oberflächenbereich des vorderen Abdeckelements (71) größer ist als ein Gesamtoberflächenbereich des rechten unteren Abdeckelements und des linken unteren Abdeckelements in der Frontansicht des Fahrzeugs,
das rechte lichtdurchlässige Element so angeordnet ist, dass es entlang der rechten Rille zwischen dem vorderen Abdeckelement und der rechten Rille verläuft, und
das linke lichtdurchlässige Element so angeordnet ist, dass es entlang der linken Rille zwischen dem vorderen Abdeckelement und der linken Rille verläuft.

4. Fahrzeug (100) nach einem der Ansprüche 1 bis 3, wobei
die Positionslampeneinheit (300) Halteelemente (350) aufweist, die das jeweilige rechte lichtdurchlässige Element und das jeweilige linke lichtdurchlässige Element an dem Abdeckelement halten, und wobei
die Halteelemente (350) der Positionslampeneinheit (300) so angeordnet sind, dass sie mit wenigstens einem Teil des vorderen Abdeckelements (71), der rechten Rille (73a) und der linken Rille (73a) hinter dem vorderen Abdeckelement (71), der rechten Rille (73a) und der linken Rille (73a) in der Frontansicht des Fahrzeugs überlappen.

5. Fahrzeug (100) nach einem der Ansprüche 1 bis 4, wobei
eine Länge des rechten lichtdurchlässigen Elements größer ist als eine Länge von einer Mitte des vorderen Abdeckelements (71) zu einem Seitenrand der Öffnung der Aussparung (72o) in einer Richtung, in der die rechte Rille (73a) in der Frontansicht des Fahrzeugs verläuft,
eine Länge des rechten lichtdurchlässigen Elements größer ist als eine Länge von einer Mitte des vorderen Abdeckelements (71) zu dem einen Seitenrand der Öffnung der Aussparung (72o) in der Rechts-Links-Richtung in der Frontansicht des Fahrzeugs,
eine Breite des rechten lichtdurchlässigen Elements kleiner ist als eine Breite der rechten Rille (73a) in der Oben-Unten-Richtung in der Frontansicht des Fahrzeugs,
eine Länge des linken lichtdurchlässigen Elements größer ist als eine Länge von der Mitte des vorderen Abdeckelements (71) zu einem anderen Seitenrand der Öffnung der Aussparung (72o) in einer Richtung, in der die linke Rille (73a) in der Frontansicht des Fahrzeugs verläuft,
eine Länge des linken lichtdurchlässigen Elements größer ist als eine Länge von der Mitte des vorderen Abdeckelements (71) zu dem anderen Seitenrand der Öffnung der Aussparung (72o) in der Rechts-Links-Richtung in der Frontansicht des Fahrzeugs, und
eine Breite des linken lichtdurchlässigen Elements kleiner ist als eine Breite der linken Rille (73a) in der Oben-Unten-Richtung in der Frontansicht des Fahrzeugs.

6. Fahrzeug (100) nach einem der Ansprüche 1 bis 5, das ferner einen Luftkanal (80) umfasst, der vor dem Kopfrohr (13) angeordnet ist und Luft zu einem Motor (20) leitet, wobei
die Öffnung der Aussparung (72o) einen Ansaugtrakt (80P) des Luftkanals (80) aufweist.

7. Fahrzeug (100) nach einem der Ansprüche 1 bis 6, wobei
sowohl das rechte lichtdurchlässige Element als auch das linke lichtdurchlässige Element als Teil einer äußeren Linse (340) vorgesehen sind.

8. Fahrzeug (100) nach einem der Ansprüche 1 bis 7, wobei
eine Breite in der Oben-Unten-Richtung jeweils der rechten Rille (73a) und der linken Rille (73a) nach hinten in der Vorne-Hinten-Richtung des Fahrzeugs allmählich zunimmt.

9. Fahrzeug (100) nach einem der Ansprüche 1 bis 8, wobei
die Positionslampeneinheit (300) ferner Folgendes beinhaltet:
eine rechte Lichtquelle (320), die an einem Ende des rechten lichtdurchlässigen Elements angeordnet ist,
ein rechtes Lichtleitelement (330), das hinter dem rechten lichtdurchlässigen Element angeordnet ist und von der rechten Lichtquelle (320) erzeugtes Licht zu einem anderen Ende des rechten lichtdurchlässigen Elements leitet, während es das Licht nach vorne emittiert,
eine linke Lichtquelle (320), die an einem Ende des linken lichtdurchlässigen Elements angeordnet ist, und
ein linkes Lichtleitelement (330), das hinter dem linken lichtdurchlässigen Element angeordnet ist und von der linken Lichtquelle (320) erzeugtes Licht zu einem anderen Ende des linken lichtdurchlässigen Elements leitet, während es das Licht nach vorne emittiert.

10. Fahrzeug (100) nach einem der Ansprüche 1 bis 9, wobei
die Positionslampeneinheit (300) eine Ausblendfunktion hat, die Licht als Reaktion auf einen Abschaltbefehl allmählich abschaltet.

11. Baugruppe aus einem Abdeckelement, einer Positionslampeneinheit und einer Scheinwerfereinheit für ein Fahrzeug (100) mit Sattelsitz oder des Reitsitztyps, wie zum Beispiel ein Fahrzeug des Sattelreittyps nach einem der Ansprüche 1 bis 10, wobei die Baugruppe Folgendes umfasst:
ein Abdeckelement (70), das zum Anordnen vor einem Kopfrohr (13) des Fahrzeugs (100) konfiguriert ist; und
eine Positionslampeneinheit (300), die an dem Abdeckelement (70) angeordnet ist; wobei
das Abdeckelement (70) eine Aussparung (72o) hat, die in einer Mitte des Fahrzeugs (100) angeordnet werden kann, und die so angeordnet ist, dass sie in Rückwärtsrichtung des Fahrzeugs (100) konkav oder eingelassen ist,
ein vorderes Abdeckelement (71), das von einer Position weiter vorne als eine Öffnung der Aussparung (72o) zu einer Position weiter oben und hinten als die Öffnung in einer Seitenansicht des Fahrzeugs verläuft und die nach oben, nach rechts und nach links von einer Position vor der Öffnung der Aussparung (72o) in einer Frontansicht des Fahrzeugs verläuft,
eine rechte Rille (73a), die so ausgebildet ist, dass sie sich an einer Position weiter rechts befindet als die Aussparung (72o) und nach rechts verläuft und die so angeordnet ist, dass sie in Richtung auf eine Innenseite des Fahrzeugs (100) konkav, vertieft, versenkt oder eingelassen ist, und
eine linke Rille (73a), die so ausgebildet ist, dass sie sich an einer Position weiter links befindet als die Aussparung (72o) und nach links verläuft und die so angeordnet ist, dass sie in Richtung auf eine Innenseite des Fahrzeugs (100) konkav oder eingelassen ist, wobei
die Positionslampeneinheit (300) ein rechtes lichtdurchlässiges Element hat, dessen Länge in einer Rechts-Links-Richtung größer ist als eine Länge in einer Oben-Unten-Richtung, eine lichtdurchlässige Eigenschaft hat und so an dem Abdeckelement (70) angeordnet ist, dass sie sich unterhalb des vorderen Abdeckelements (71) befindet und nach oben und nach rechts verläuft, und
ein linkes lichtdurchlässiges Element, dessen Länge in der Rechts-Links-Richtung größer ist als eine Länge in der Oben-Unten-Richtung, das eine lichtdurchlässige Eigenschaft hat und so an dem Abdeckelement (70) vorgesehen ist, dass es sich unterhalb des vorderen Abdeckelements (71) befindet und nach oben und nach links verläuft, und wobei
die rechte Rille (73a) und die linke Rille (73a) an Positionen weiter unten als das jeweilige rechte lichtdurchlässige Element und das linke lichtdurchlässige Element vorgesehen sind, und
die Baugruppe **dadurch gekennzeichnet ist, dass** sie ferner eine Scheinwerfereinheit (200) umfasst, die an einer Position weiter unten angeordnet ist als die Positionslampeneinheit (300), und wenigstens ein Teil des Abdeckelements (70) zwischen der Positionslampeneinheit (300) und der Scheinwerfereinheit (200) angeordnet ist.

12. Verfahren zum Montieren oder Anordnen eines Fahrzeugs (100) mit Sattelsitz oder des Reitsitztyps wie zum Beispiel ein Motorfahrzeug des Sattelreittyps, wobei das Verfahren Folgendes beinhaltet:
Bereitstellen eines Kopfrohrs (13), eines Abdeckelements (70), einer Positionslampeneinheit (300) und einer Scheinwerfereinheit (200);
Anordnen des Abdeckelements vor dem Kopfrohr (13);
Anordnen der Positionslampeneinheit (300) an dem Abdeckelement (70), wobei das Abdeckelement (70) eine Aussparung (72o) hat, wobei das Verfahren Folgendes beinhaltet:
Anordnen der Aussparung (72o) in einer Mitte des Fahrzeugs (100), wobei die Aussparung in Rückwärtsrichtung des Fahrzeugs konkav oder eingelassen ist,
Bereitstellen eines vorderen Abdeckelements (71), so dass es von einer Position weiter vorne als eine Öffnung der Aussparung (72o) zu einer Position weiter oben und hinten verläuft als die Öffnung in einer Seitenansicht des Fahrzeugs, und nach oben, nach rechts und nach links von einer Position vor der Öffnung der Aussparung (72o) in einer Frontansicht des Fahrzeugs verläuft,
Ausbilden einer rechten Rille (73a), so dass sie sich an einer Position weiter rechts befindet als die Aussparung (72o) und nach rechts verläuft und in Richtung auf eine Innenseite des Fahrzeugs (100) konkav oder eingelassen ist, und
Ausbilden einer linken Rille (73a), so dass sie sich an einer Position weiter links befindet als die Aussparung (72o) und nach links verläuft und in Richtung auf eine Innenseite des Fahrzeugs (100) konkav oder eingelassen ist, wobei
die Positionslampeneinheit (300) ein rechtes lichtdurchlässiges Element, dessen Länge größer ist in einer Rechts-Links-Richtung als eine Länge in einer Oben-Unten-Richtung, eine lichtdurchlässige Eigenschaft hat, und
ein linkes lichtdurchlässiges Element hat, dessen Länge größer ist in der Rechts-Links-Richtung als eine Länge in der Oben-Unten-Richtung, die eine lichtdurchlässige Eigenschaft hat, wobei das Verfahren Folgendes beinhaltet:
Bereitstellen des rechten lichtdurchlässigen Elements an dem Abdeckelement (70), so dass es sich unterhalb des vorderen Abdeckelements (71) befindet und nach oben und nach rechts verläuft,
Bereitstellen des linken lichtdurchlässigen Elements an dem Abdeckelement (70), so dass es sich unterhalb des vorderen Abdeckelements (71) befindet und nach oben und nach links verläuft, und
Bereitstellen der rechten Rille (73a) und der linken Rille (73a) an Positionen weiter unten als das jeweilige rechte lichtdurchlässige Element und linke lichtdurchlässige Element, und
Bereitstellen der Scheinwerfereinheit (200) an einer Position weiter unten als die Positionslampeneinheit (300), so dass wenigstens ein Teil des Abdeckelements (70) zwischen der Positionslampeneinheit (300) und der Scheinwerfereinheit (200) angeordnet ist.

## Revendications

1. Véhicule à selle ou à monter à califourchon (100), tel qu'un véhicule à moteur de type à enfourcher, comprenant :
un tube de fourche (13) ;
un élément de protection (70) agencé devant le tube de fourche (13) ; et
une unité de feu de position (300) agencée au niveau de l'élément de protection (70), dans lequel
l'élément de protection (70) présente un renfoncement (72o) qui est agencé au centre du véhicule (100) et est concave ou bosselé vers l'arrière du véhicule (100),
un élément de protection avant (71) qui s'étend à partir d'une position plus avant qu'une ouverture du renfoncement jusqu'à une position plus élevée et plus arrière que l'ouverture selon une vue de côté du véhicule, et s'étend vers le haut, vers la droite et vers la gauche à partir d'une position située à l'avant de l'ouverture du renfoncement (72o) selon une vue avant du véhicule,
une rainure droite (73a) qui est formée pour être située en une position plus à droite que le renfoncement (72o) et pour s'étendre vers la droite, et est concave ou bosselée vers l'intérieur du véhicule (100), et
une rainure gauche (73a) qui est formée pour être située en une position plus à gauche que le renfoncement (72o) et pour s'étendre vers la gauche, et est concave ou bosselée vers l'intérieur du véhicule (100), dans lequel
l'unité de feu de position (300) présente un élément transmetteur de lumière droit qui présente une longueur plus grande dans un sens droite-gauche que dans un sens haut-bas, présente une propriété de transmission lumineuse et est prévu au niveau de l'élément de protection (70) pour être situé sous l'élément de protection avant (71) et pour s'étendre vers le haut et vers la droite, et
un élément transmetteur de lumière gauche qui présente une longueur plus grande dans le sens droite-gauche que dans le sens haut-bas, présente une propriété de transmission lumineuse et est prévu au niveau de l'élément de protection (70) pour être situé sous l'élément de protection avant (71) et pour s'étendre vers le haut et vers la gauche, et dans lequel
la rainure droite (73a) et la rainure gauche (73a) sont prévues en des positions plus basses que l'élément transmetteur de lumière droit et l'élément transmetteur de lumière gauche respectifs, et
le véhicule à selle ou à monter à califourchon étant **caractérisé en ce qu'**il comprend en outre une unité de phare avant (200) prévue en une position plus basse que l'unité de feu de position (300), et **en ce qu'**au moins une partie de l'élément de protection (70) est agencée entre l'unité de feu de position (300) et l'unité de phare avant (200).

2. Véhicule (100) selon la revendication 1, dans lequel
un bord avant de l'élément de protection avant (71) s'étend à l'oblique vers le haut à partir d'une position plus extérieure que le centre dans un sens et s'étend à l'oblique vers le haut à partir d'une position plus extérieure que le centre dans un autre sens selon une vue avant du véhicule.

3. Véhicule (100) selon la revendication 1 ou 2, dans lequel l'élément de protection (70) comprend en outre :
un élément de protection inférieur droit (73R) qui est agencé sous l'élément de protection avant (71), comporte la rainure droite (73a) et s'étend vers le bas et vers l'arrière à partir de l'ouverture du renfoncement (72o) de l'élément de protection avant (71) selon une vue de côté du véhicule ;
un élément de protection inférieur gauche (73L) qui est agencé sous l'élément de protection avant (71), comporte la rainure gauche (73a) et s'étend vers le bas et vers l'arrière à partir de l'ouverture du renfoncement (72o) de l'élément de protection avant (71) selon une vue de côté du véhicule ;
un élément de protection latéral droit (74R) qui est fixé à l'élément de protection inférieur droit (73R), et agencé en dehors d'au moins une partie du moteur pour s'étendre vers l'arrière à partir de l'élément de protection inférieur droit (73R) ; et
un élément de protection latéral gauche (74L) qui est fixé à l'élément de protection inférieur gauche (73L), et agencé en dehors d'au moins une partie du moteur pour s'étendre vers l'arrière à partir de l'élément de protection inférieur gauche (73L), dans lequel
la surface de l'élément de protection avant (71) est supérieure à la surface totale de l'élément de protection inférieur droit et de l'élément de protection inférieur gauche selon une vue avant du véhicule,
l'élément transmetteur de lumière droit est prévu pour s'étendre le long de la rainure droite entre l'élément de protection avant et la rainure droite, et
l'élément transmetteur de lumière gauche est prévu pour s'étendre le long de la rainure gauche entre l'élément de protection avant et la rainure gauche.

4. Véhicule (100) selon l'une quelconque des revendications 1 à 3, dans lequel
l'unité de feu de position (300) comporte des éléments de retenue (350) qui retiennent l'élément transmetteur de lumière droit respectif et l'élément transmetteur de lumière gauche respectif au niveau de l'élément de protection, et dans lequel
les éléments de retenue (350) de l'unité de feu de position (300) sont agencés pour chevaucher au moins une partie de l'élément de protection avant (71), la rainure droite (73a) et la rainure gauche (73a) derrière l'élément de protection avant (71), la rainure droite (73a) et la rainure gauche (73a) selon une vue avant du véhicule.

5. Véhicule (100) selon l'une quelconque des revendications 1 à 4, dans lequel
une longueur de l'élément transmetteur de lumière droit est supérieure à la longueur partant du centre de l'élément de protection avant (71) jusqu'à un bord latéral de l'ouverture du renfoncement (72o) dans le sens dans lequel la rainure droite (73a) s'étend selon une vue avant du véhicule,
une longueur de l'élément transmetteur de lumière droit est supérieure à la longueur partant du centre de l'élément de protection avant (71) jusqu'à un bord latéral de l'ouverture du renfoncement (72o) dans le sens droite-gauche selon une vue avant du véhicule,
une largeur de l'élément transmetteur de lumière droit est inférieure à la largeur de la rainure droite (73a) dans le sens haut-bas selon une vue avant du véhicule,
une longueur de l'élément transmetteur de lumière gauche est supérieure à la longueur partant du centre de l'élément de protection avant (71) jusqu'à un autre bord latéral de l'ouverture du renfoncement (72o) dans le sens dans lequel la rainure gauche (73a) s'étend selon une vue avant du véhicule,
une longueur de l'élément transmetteur de lumière gauche est supérieure à la longueur partant du centre de l'élément de protection avant (71) jusqu'à l'autre bord latéral de l'ouverture du renfoncement (72o) dans le sens droite-gauche selon une vue avant du véhicule, et
une largeur de l'élément transmetteur de lumière gauche est inférieure à la largeur de la rainure gauche (73a) dans le sens haut-bas selon une vue avant du véhicule.

6. Véhicule (100) selon l'une quelconque des revendications 1 à 5, comprenant en outre une conduite d'air (80) qui est agencée devant le tube de fourche (13) et amène de l'air à un moteur (20), dans lequel
l'ouverture du renfoncement (72o) comporte un passage d'admission (80P) de la conduite d'air (80).

7. Véhicule (100) selon l'une quelconque des revendications 1 à 6, dans lequel
l'élément transmetteur de lumière droit et l'élément transmetteur de lumière gauche sont respectivement prévus en tant que partie d'une lentille extérieure (340).

8. Véhicule (100) selon l'une quelconque des revendications 1 à 7, dans lequel
une largeur dans le sens haut-bas de la rainure droite (73a) et de la rainure gauche (73a) augmente progressivement vers l'arrière dans le sens avant-arrière du véhicule.

9. Véhicule (100) selon l'une quelconque des revendications 1 à 8, dans lequel
l'unité de feu de position (300) comporte en outre
une source lumineuse droite (320) qui est agencée au niveau d'une extrémité de l'élément transmetteur de lumière droit,
un élément de guidage de lumière droit (330) qui est agencé derrière l'élément transmetteur de lumière droit, et amène la lumière produite par la source lumineuse droite (320) jusqu'à une autre extrémité de l'élément transmetteur de lumière droit tout en émettant de la lumière vers l'avant,
une source lumineuse gauche (320) qui est agencée au niveau d'une extrémité de l'élément transmetteur de lumière gauche, et
un élément de guidage de lumière gauche (330) qui est agencé derrière l'élément transmetteur de lumière gauche et amène la lumière produite par la source lumineuse gauche (320) jusqu'à une autre extrémité de l'élément transmetteur de lumière gauche tout en émettant de la lumière vers l'avant.

10. Véhicule (100) selon l'une quelconque des revendications 1 à 9, dans lequel
l'unité de feu de position (300) présente une fonction de réduction qui éteint progressivement la lumière en réaction à une consigne d'extinction.

11. Ensemble constitué par un élément de protection, une unité de feu de position et une unité de phare avant, destiné à un véhicule à selle ou à monter à califourchon (100), tel qu'un véhicule à moteur de type à enfourcher, selon l'une quelconque des revendications 1 à 10, l'ensemble comprenant :
un élément de protection (70) configuré pour être agencé devant un tube de fourche (13) du véhicule (100) ; et
une unité de feu de position (300) agencée au niveau de l'élément de protection (70), dans lequel
l'élément de protection (70) présente un renfoncement (72o) qui peut être agencé au centre du véhicule (100) et est conçu pour être concave ou bosselé vers l'arrière du véhicule (100),
un élément de protection avant (71) qui s'étend à partir d'une position plus avant qu'une ouverture du renfoncement (72o) jusqu'à une position plus élevée et plus arrière que l'ouverture selon une vue de côté du véhicule, et est agencé pour s'étendre vers le haut, vers la droite et vers la gauche à partir d'une position située à l'avant de l'ouverture du renfoncement (72o) selon une vue avant du véhicule,
une rainure droite (73a) qui est formée pour être située en une position plus à droite que le renfoncement (72o) et pour s'étendre vers la droite, et est conçue pour être concave, renfoncée, en creux ou bosselée vers l'intérieur du véhicule (100), et
une rainure gauche (73a) qui est formée pour être située en une position plus à gauche que le renfoncement (72o) et pour s'étendre vers la gauche, et est conçue pour être concave ou bosselée vers l'intérieur du véhicule (100), dans lequel
l'unité de feu de position (300) présente un élément transmetteur de lumière droit qui présente une longueur plus grande dans un sens droite-gauche que dans un sens haut-bas, présente une propriété de transmission lumineuse et est prévu au niveau de l'élément de protection (70) pour être situé sous l'élément de protection avant (71) et pour s'étendre vers le haut et vers la droite, et
un élément transmetteur de lumière gauche qui présente une longueur plus grande dans le sens droite-gauche que dans le sens haut-bas, présente une propriété de transmission lumineuse et est prévu au niveau de l'élément de protection (70) pour être situé sous l'élément de protection avant (71) et pour s'étendre vers le haut et vers la gauche, et dans lequel
la rainure droite (73a) et la rainure gauche (73a) sont prévues en des positions plus basses que l'élément transmetteur de lumière droit et l'élément transmetteur de lumière gauche respectifs, et
l'ensemble est **caractérisé en ce qu'**il comprend en outre une unité de phare avant (200) prévue en une position plus basse que l'unité de feu de position (300), et **en ce qu'**au moins une partie de l'élément de protection (70) est agencée entre l'unité de feu de position (300) et l'unité de phare avant (200).

12. Procédé d'assemblage ou de montage d'un véhicule à selle ou à monter à califourchon (100), tel qu'un véhicule à moteur de type à enfourcher, le procédé comprenant :
la disposition d'un tube de fourche (13), d'un élément de protection (70), une unité de feu de position (300) et une unité de phare avant (200) ;
l'agencement de l'élément de protection devant le tube de fourche (13) ;
l'agencement de l'unité de feu de position (300) au niveau de l'élément de protection (70), dans lequel
l'élément de protection (70) présente un renfoncement (72o), le procédé comprenant :
l'agencement du renfoncement (72o) au centre du véhicule (100), le renfoncement étant concave ou bosselé vers l'arrière du véhicule,
la disposition d'un élément de protection avant (71) destiné à s'étendre à partir d'une position plus avant qu'une ouverture du renfoncement (72o) jusqu'à une position plus élevée et plus arrière que l'ouverture selon une vue de côté du véhicule, et destiné à s'étendre vers le haut, vers la droite et vers la gauche à partir d'une position située à l'avant de l'ouverture du renfoncement (72o) selon une vue avant du véhicule,
la formation d'une rainure droite (73a) destinée à être située en une position plus à droite que le renfoncement (72o) et destinée à s'étendre vers la droite, et qui est concave ou bosselée vers l'intérieur du véhicule (100), et
la formation d'une rainure gauche (73a) destinée à être située en une position plus à gauche que le renfoncement (72o) et destinée à s'étendre vers la gauche, et qui est concave ou bosselée vers l'intérieur du véhicule (100), dans lequel
l'unité de feu de position (300) présente un élément transmetteur de lumière droit qui présente une longueur plus grande dans un sens droite-gauche que dans un sens haut-bas, présente une propriété de transmission lumineuse, et
un élément transmetteur de lumière gauche qui présente une longueur plus grande dans le sens droite-gauche que dans le sens haut-bas, présente une propriété de transmission lumineuse, le procédé comprenant :
la disposition de l'élément transmetteur de lumière droit au niveau de l'élément de protection (70) de manière qu'il soit situé sous l'élément de protection avant (71) et qu'il s'étende vers le haut et vers la droite,
la disposition de l'élément transmetteur de lumière gauche au niveau de l'élément de protection (70) de manière qu'il soit situé sous l'élément de protection avant (71) et qu'il s'étende vers le haut et vers la gauche, et
la disposition de la rainure droite (73a) et de la rainure gauche (73a) en des positions plus basses que l'élément transmetteur de lumière droit et l'élément transmetteur de lumière gauche respectifs, et
la disposition de l'unité de phare avant (200) en une position plus basse que l'unité de feu de position (300) de manière qu'au moins une partie de l'élément de protection (70) soit agencée entre l'unité de feu de position (300) et l'unité de phare avant (200).
